# EUROPEAN PATENT APPLICATION

(11) **EP 4 756 663 A1**
(43) Date of publication of application: **10.06.2026**
(21) Application number: 24218345.7
(22) Date of filing: 09.12.2024
(51) Int. Cl.: G06F 30/27, G06N 3/045, G06N 20/10, G06V 10/40, G06V 10/48, G06V 10/70, G06V 10/82, G06V 30/10, G06V 30/422

(54) **A METHOD AND SYSTEM FOR GENERATING DIGITAL REPRESENTATIONS OF ENGINEERING DIAGRAMS IN A COMPUTING ENVIRONMENT**

(71) Applicant: Siemens Aktiengesellschaft, 80333 München (DE)
(72) Inventor: Grundmann, Lisa-Marie, 85630 Grasbrunn (DE); Srinidhi, Kulkarni, 560092 Bangalore, Karnataka (IN); Ganesh, S, 560037 Bangalore, Karnataka (IN); Fakabbir, Amin, 560100 Bangalore, Karnataka (IN); Wehrstedt, Jan Christoph, 81829 München (DE); Sanjukta, Ghosh, 90571 Schwaig bei Nürnberg (IN)
(74) Representative: Isarpatent

(57) **Abstract**

The present invention relates a method and system for generating digital representations of engineering diagrams in a computing environment (100). The method includes receiving engineering diagrams associated with assets (108A-N) installed in technical installation (106) from data sources (120A-N). The method includes determining regions of interest within the engineering diagrams. Further, the method includes detecting a presence of connectors existing between components within the region of interest. Further, the method includes determining patterns associated with the connectors based on the properties, a type, and a position of the connectors. Further, the method includes detecting connection paths existing between the components based on the connectors and the patterns. Additionally, the method includes generating digital representation of the engineering diagrams based on the connection paths. Furthermore, the method includes outputting the digital representation of the engineering diagrams. Further, the method includes validating the digital representation based on real-time feedback data.

## Description

The present invention generally relates to the field of engineering systems, and more particularly relates to a method and system for generating digital representations of engineering diagrams in a computing environment.

In an automation environment, one or more engineering diagrams are used to represent one or more physical components, physical connections between the one or more physical components in a technical installation and corresponding parameter values of the one or more physical components and the physical connections. The one or more physical components may include, for example, a programmable logic controller, one or more field devices, or any other automation devices. The one or more engineering diagrams may include Piping and Instrumentation Diagrams (P&IDs), electrical wiring diagrams, circuit diagrams, Heating, Ventilation, and Air Conditioning (HVAC) diagrams, function diagrams, an engineering design of the technical installation or a floor layout of the technical installation. P&IDs are typically created using computer-aided drawing (CAD) tools or either manually drawn. However, such P&IDs or any other engineering diagrams are frequently distributed as PDF files or scanned documents. In many legacy plants, the available P&IDs or other engineering diagrams exist as scanned files. Therefore, operators relying on these non-editable formats of the P&IDs create significant challenges. One such challenge is that the information in PDF or scanned images is not machine-readable or interpretable by CAD like tools. Therefore, the components and their interconnections are not stored in a structured data format.

In such a scenario, a primary challenge is that the engineers must manually examine multiple sheets of P&IDs to extract plant information, which increases the risk of errors and omissions. Furthermore, P&IDs may follow incompatible drafting standards, which vary between organizations. Even experienced engineers may encounter difficulties in interpreting P&IDs from different entities due to differences in nomenclature and drafting conventions. Additionally, the volume and complexity of these engineering diagrams render manual digitization of scanned P&IDs practically unfeasible.

Another technical challenge lies in the composition of P&IDs, which include symbols, text, lines, and other information, making it difficult for any available tools to accurately scan and reconstruct a network of connected components. Currently, digitization efforts are often performed manually on a page-by-page basis. Some traditional techniques, such as for example, image detection techniques and an Optical Character Recognition (OCR) software are used for symbol and text recognition. However, such traditional techniques fail to accurately recognize minute details, such as symbols or lines in engineering diagrams due to variations in size, style, and orientation. Furthermore, scanned documents often contain noise (such as, for example, speckles, or uneven lighting) and artifacts (such as, for example, creases, or stains) that may interfere with image processing algorithms. Such noise and artifacts may affect the quality of the scanned documents leading to errors and inaccurate information.

In light of these challenges, there is a need for a method and system capable of generating a digital representation of engineering diagrams within a computing environment.

Therefore, it is an object of the present invention to provide a method and system for generating digital representation of one or more engineering diagrams in a computing environment.

The object of the present invention is achieved by a method for generating digital representation of one or more engineering diagrams in a computing environment. The method comprises receiving one or more engineering diagrams associated with one or more assets installed in a technical installation from one or more data sources.

The one or more engineering diagrams comprises one or more components connected using one or more connectors. The one or more components represents the one or more assets. The one or more engineering diagrams comprises asset design and maintenance information, asset configuration information, asset wiring links or connections, asset physical block information, and the like. In an embodiment, the asset comprises servers, robots, switches, automation devices, programmable logic controllers (PLC)s, human machine interfaces (HMIs), input output modules, motors, valves, pumps, actuators, sensors and other industrial equipment(s). the one or more engineering diagrams comprises at least one of an electrical wiring diagram, a piping and instrumentation diagram, circuit diagrams, Heating, Ventilation, and Air Conditioning (HVAC) diagrams, function diagrams, an engineering design of the technical installation and a floor layout of the technical installation.

The method comprises determining one or more regions of interest within the received one or more engineering diagrams by preprocessing the received one or more engineering diagrams. The one or more regions of interest comprise sub networks of the engineering diagrams. The sub-networks comprises an image portion of the engineering diagram depicting a part of the engineering diagram.

The method comprises detecting a presence of the one or more connectors existing between the one or more components within the determined region of interest using a trained image processing model. The one or more connectors comprises a plurality of properties. The one or more connectors comprises lines and kernels. The plurality of properties comprises component identifier, component type, component configuration parameters, and component communication parameters. The trained image processing model comprises artificial intelligence based model.

The method comprises determining one or more patterns associated with the detected one or more connectors based on the plurality of properties of the one or more connectors, a type of the one or more connectors, and a position of the one or more connectors within the determined one or more regions of interest. The one or more patterns comprises one or more hyperparameter ranges corresponding to the detected one or more connector. The one or more hyperparameter ranges comprises a kernel size, a minimal length, a maximum gap, angle resolution, connector types, distance resolution, and number of votes.

The method further comprises detecting one or more connection paths existing between the one or more components based on the detected one or more connectors and the determined one or more patterns using the trained image processing model. The one or more connection paths comprises at least one connector connecting a source node to a target node in a specific pattern.

The method further comprises generating a digital representation of the one or more engineering diagrams based on the detected one or more connection paths. The digital representation comprises a visual representation of the one or more engineering diagrams.

The visual representation comprises an image, or a graphical representation or an ontological representation of the one or more engineering diagrams. Alternatively, the digital representation comprises a machine-readable format executable by one of a local system and a third party system using Application Programming Interfaces (APIs). The machine-readable format comprises a software code, a program, or an instruction executable by the local system or the third party system.

The method further comprises outputting the generated digital representation of the one or more engineering diagrams in a desired output format. The desired output format comprises a visual graph, a knowledge graph, a hierarchical tree graph, a Json code format or the like.

In a preferred embodiment, in determining the one or more regions of interest within the received one or more engineering diagrams by preprocessing the received one or more engineering diagrams, the method comprises filtering the received one or more engineering diagrams using image processing models to determine the one or more regions of interest. Further, the method comprises classifying the determined one or more regions of interest into one or more subnetworks based on the image processing models. The one or more subnetworks comprises the one or more components connected using the one or more connectors in a specific pattern.

In another preferred embodiment, the method comprises obtaining a real-time feedback data for the generated digital representation from a user. Further, the method comprises validating the generated digital representation of the one or more engineering diagrams based on the obtained real-time feedback data and prestored rules. Further, the method comprises determining one or more errors associated with the generated digital representation based on the results of validation. The one or more errors comprises at least one of missing connectors, missing connection paths, missing components, false connectors, false connection paths, and false components. The method comprises tuning the one or more hyperparameter ranges for the generated digital representation based on the determined one or more errors. The one or more hyperparameter ranges comprises a kernel size, a minimal length, a maximum gap, angle resolution, connector types, distance resolution, and number of votes. Further, the method comprises generating an updated digital representation of the one or more engineering diagrams based on the tuned one or more hyperparameter ranges.

In another preferred embodiment, in validating the generated digital representation of the one or more engineering diagrams based on the obtained real-time feedback data and the prestored rules, the method comprises segmenting one or more regions of the digital representation comprising the obtained real-time feedback data. The obtained real time feedback data comprises a human-annotated portion of the digital representation.

Further, the method comprises identifying one or more kernels along the segmented one or more regions of the digital representation using a corner point detection technique. The method comprises determining whether each of the identified one or more kernels represent a valid corner based on a horizontal pixel extension and a vertical pixel extension. Furthermore, the method comprises determining a best suitable kernel from among the one or more kernels based on the determination. The best suitable kernel is determined by correlating the one or more kernels with one or more pre-stored kernels. Further, the method comprise tuning the plurality of properties associated with the best suitable kernel using a machine learning model. Furthermore, the method comprises updating a kernel database with the tuned plurality of properties associated with the best suitable kernel. The machine learning model may be based on image processing or computer vision techniques.

In another preferred embodiment, the method comprises generating one or more recommendations for rectifying the one or more errors associated with the generated digital representation using an artificial intelligence-based model.

In yet another preferred embodiment, the method comprises identifying types of the one or more components within the determined one or more regions of interest. The method further comprises assigning a label to each of the identified types of the one or more components based on a prestored component table. Furthermore, the method comprises generating the digital representation of the one or more engineering diagrams with the assigned label.

In yet another preferred embodiment, in outputting the generated digital representation of the one or more engineering diagrams in the desired output format, the method comprises transforming the generated digital representation of the one or more engineering diagrams into a visual representation to be displayed on a user interface of a user device. The method further comprises transforming the generated digital representation of the one or more engineering diagrams into a machine readable format executable by one of a local system and a third party system using Application Programming Interfaces (APIs).

In still another preferred embodiment, in detecting the presence of the one or more connectors existing between the one or more components within the determined region of interest, the method comprises identifying at least one component from among the one or more components within each of the classified one or more sub-networks. The method comprises determining a number of connectors connected to the identified source node by analyzing a respective area of the region of interest comprising the source node.

Further, the method comprises detecting a presence of a line connected to the source node using a Hough transformation model. The method comprises determining a direction of a connection path by evaluating the plurality of properties associated with the detected line. The method comprises detecting a presence of a junction along the determined direction of the connection path using a graph traversal model. The junction comprises a merging node connecting two or more lines in a specific pattern.

In still another preferred embodiment, in detecting the one or more connection paths existing between the one or more components, the method comprises determining an interconnection between the one or more components within each of the classified one or more sub networks based on a type of the detected one or more connectors and the determined one or more patterns using the trained image processing model. Further, the method comprises classifying the interconnection into one of a simple connection and a complex connection based on the determined type of the interconnection.

Furthermore, the method comprises determining the source node as a starting point based on the classified interconnection. Further, the method comprises determining at least one of the lines and the junction connected to the determined source node in a specific pattern. Additionally, the method comprises determining the plurality of properties of the determined at least one line and the junction. The method comprises determining a presence of the target node on at least one end of the line by traversing along the direction of the determined at least one line and the junction using a graph traversal model. The line corresponds to one of an individual line and a line belonging to the junction. Moreover, the method comprises generating the connection path from the determined source node to the target node based on the determined plurality of properties and the determined one or more patterns of the line and the junction.

In yet another preferred embodiment, the method comprises determining whether the determined interconnection corresponds to the complex connection. The method comprises determining whether the complex connection comprises at least one cross connection between at least two connectors. The method further comprises detecting at least one of full lines and non-solid lines within the determined one or more regions of interest by applying a first cross connection detection model on an original image of the engineering diagram. The method comprises generating a manipulated image of the original image by extending the detected non-solid lines into full lines using a line detection model to rectify gaps in the lines. The method further comprises detecting the full lines in the manipulated image by applying a second cross connection detection model on the manipulated image. The extended non-solid lines are marked as full lines.

Furthermore, the method comprises comparing the detected full lines from the original image with the detected full lines from the manipulated image to identify deviations. The method further comprises determining actual non-solid lines in the original image based on the identified deviations. The actual non-solid lines are determined by filtering the full lines detected in the original image from the full lines detected in the manipulated image.

In another preferred embodiment, in generating the digital representation of the one or more engineering diagrams based on the detected one or more connection paths, the method comprises generating sub-digital representations for each of the one or more sub networks of the one or more engineering diagrams. The method comprises correlating each of the generated sub-digital representations with the received one or more engineering diagrams. Further, the method comprises determining logical interconnections between the one or more components within each of the one or more sub-more networks based on the correlation. Further, the method comprises generating a consolidated digital representation of the one or more engineering diagrams based on the determined logical interconnections.

In yet another preferred embodiment, the method comprises analyzing each of the interconnections between the one or more components based on a machine learning model. Further, the method comprises generating a logical interpretation for each of the analyzed interconnections based on the type of the interconnection, type of the one or more components, a domain type of engineering diagram, one or more parameters associated with the one or more components and the real-time feedback data. The logical interpretation comprises information relating to the one or more components, type of interconnections, sub network information, and connector information.

The object of the present invention is also be achieved by a computing system for generating digital representations of engineering diagrams in a computing environment. The computing system comprise one or more processors and a memory coupled to the one or more processors. The memory comprises a digital representation generation module stored in the form of machine-readable instructions and executable by the one or more processors. The digital representation generation module is configured for performing the method described above.

The object of the invention can also be achieved by a computing environment comprising a computing system, a technical installation and at least one user device.

The technical installation comprises one or more components capable of communicating component data to the computing system. Further, the user device is communicatively coupled to the computing system and the technical installation via the network.

The object of the invention can also be achieved by a computer-program product, having machine-readable instructions stored therein, that when executed by a processor, causes the processor to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of a computing environment capable of generating digital representations of one or more engineering diagrams, according to an embodiment of the present invention;
- FIG 2: is a block diagram of a computing system such as those shown in FIG 1, depicting various components to implement embodiments of the present invention;
- FIG 3: is a block diagram depicting a data flow within a digital representation generation module, such as those shown in FIG 1 and 2, capable of detecting presence of the one or more connectors existing between the one or more components within the determined region of interest according to the embodiment of the present invention;
- FIGs 4A-D: are schematic representations of a plurality of types of connectors existing between one or more components of the technical installation such as those shown in FIG. 1, according to an embodiment of the present invention;
- FIGs 5A-C: are screenshots depicting exemplary graphical user interfaces for generating digital representations of one or more engineering diagrams, according to the embodiment of the present invention;
- FIG 6: is a schematic representation of an example P & ID depicting nodes used for path traversal within a sub-network, according to an embodiment of the present invention;
- FIG 7: is a schematic representation of an exemplary digital representation generated as a machine readable code, according to an embodiment of the present invention;
- FIGs 8A-D: are schematic representations of example sub networks of P & ID with detected one or more errors, according to an embodiment of the present invention;
- FIG 9: is a block diagram depicting a data flow within a digital representation generation module, such as those shown in FIG 1 and 2, capable of tuning the one or more hyperparameter ranges for the generated digital representation based on the determined one or more errors, according to an embodiment of the present invention; and
- FIG 10: is a process flowchart illustrating an exemplary method for generating digital representations of one or more engineering diagrams, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Engineering diagrams are graphical representations used to illustrate one or more components, or assets, structure, and functionality of a technical system or process. These diagrams include various types such as for example, but not limited to, P&IDs (Piping and Instrumentation Diagrams), circuit diagrams, HVAC layouts, and function diagrams, and the like. Each diagram is designed to depict critical technical details on interconnections of a plurality of parts of the technical system, functions of the parts, construction or maintenance details and the like.

These diagrams use symbols, text annotations, and lines to represent physical components, electrical connections, piping systems, or control logic. These diagrams are essential for design, installation, operation, and troubleshooting in various engineering disciplines, serving as both technical blueprints and reference documents.

Throughout the specification, the term "asset", as used herein, may include a broad range of components, devices, objects systems, instruments, or machinery employed in various industries or technical installations. This includes but is not limited to, industrial machinery comprising motors, gears, bearings, shafts, switchgears, rotors, circuit breakers, protection devices, remote terminal units, transformers, reactors, disconnectors, gear-drives, gradient coils, magnets, radio frequency coils, and the like. Further, the assets may include, such as for example, but not limited to, technical systems comprising turbines, large drives, and other complex systems. It should be understood that the term "asset" should be interpreted broadly to include any component or device or system that generates data which requires analysis within the context of this invention.

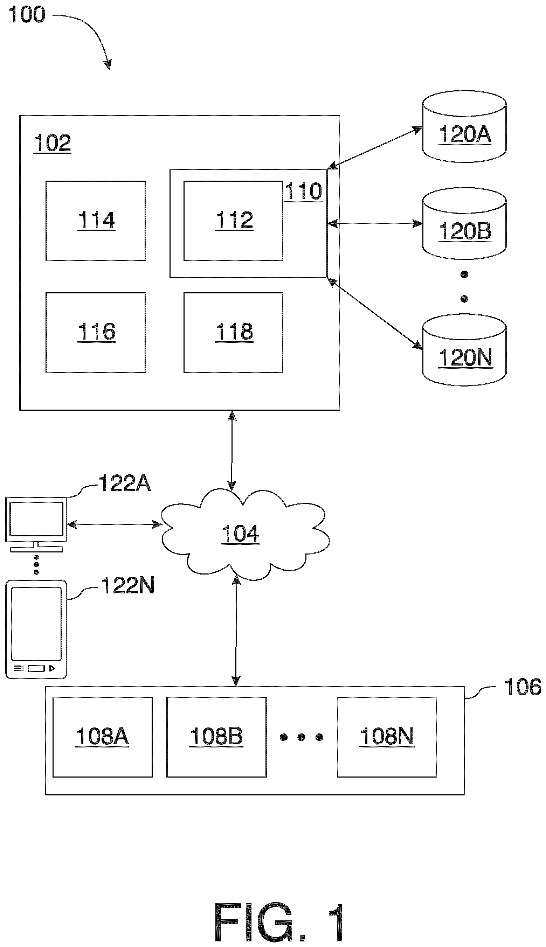

FIG 1 is a block diagram of a computing environment 100 capable of generating digital representations of one or more engineering diagrams, according to an embodiment of the present invention. Particularly, FIG 1 depicts a computing system 102 which is capable of delivering cloud applications for managing a technical installation 106 comprising one or more asset(s) 108AN. As used herein, "computing environment" refers to a processing environment comprising configurable computing physical and logical resources, for example, networks, servers, storage, applications, services, and the like, and data distributed over the cloud platform. The computing environment 100 provides on-demand network access to a shared pool of the configurable computing physical and logical resources.

The computing system 102 is connected to one or more asset(s) 108A-N in the technical installation 106 via a network 104 (e.g., Internet). The one or more asset(s) 108A-N may include servers, robots, switches, automation devices, programmable logic controllers (PLC)s, human machine interfaces (HMIs), input output modules, motors, valves, pumps, actuators, sensors, gas turbines, and other industrial equipment(s). The computing system 102 may be a public cloud, a private cloud, and/or a hybrid cloud configured to provide dedicated cloud services to its users.

Although, FIG 1 illustrates the computing system 102 connected to one technical installation 106 via the network 104, one skilled in the art can envision that the computing system 102 can be connected to several technical installations 106 located at different locations via the network 104.

Further, the computing system 102 is also connected to user devices 122A-N via the network 104. The user devices 122A-N can access the computing system 102 for automatically generating digital representations of the one or more engineering diagrams. In an embodiment, the user devices 122A-N comprises an engineering system capable of running an industrial automation application. The user devices 122A-N can be a laptop computer, desktop computer, tablet computer, smartphone, and the like. The user devices 122A-N can access applications (such as enabling users to generate digital representations of the one or more engineering diagrams based on user requirement) via a web browser. Further, the users are provided a quick option to download the digital representations from platform 110 to directly into their software running in the user devices 122A-N. Further, the user devices 122A-N may install a plug-in for accessing digital representations of one or more engineering diagrams on the computing system 102 via different simulation software running on the user devices 122A-N.

The computing system 102 comprises a platform 110, a digital representation generation module 112, a server 114 including hardware resources and an operating system (OS), a network interface 116, one or more data sources 120A-N and application program interfaces (APIs) 118. The network interface 116 enables communication between the computing system 102, the technical installation 106, and the user device(s) 122A-N. The cloud interface (not shown in FIG 1) may allow the engineers at the one or more user device(s) 122A-N to access digital representations stored at the computing system 102 and perform one or more actions on the digital representations as same instance. The server 114 may include one or more servers on which the OS is installed. The servers 114 may comprise one or more processors, one or more storage devices, such as, memory units, for storing data and machine-readable instructions for example, applications and application programming interfaces (APIs) 118, and other peripherals required for providing cloud computing functionality. The cloud platform 110 is a platform which enables functionalities such as data reception, data processing, data rendering, data communication, and the like. Using the hardware resources and the OS of the servers 114, The computing system 102 delivers the aforementioned services using the application programming interfaces 118 deployed therein. The cloud platform 110 may comprise a combination of dedicated hardware and software built on top of the hardware and the OS.

The computing system 102 may be a remote server, an edge server, a public cloud, a private cloud, and/or a hybrid cloud configured to provide dedicated software services to its users. The user devices 122A-N may access the computing system 102 for generating the digital representations of the engineering diagrams.

The user devices 122A-N may be a laptop computer, desktop computer, tablet computer, smartphone and the like. The user devices 122A-N may access applications (such as enabling users to generate digital representations of the engineering diagrams) via the web browser. Further, the user devices 122A-N may install a plug-in for accessing the applications to generate digital representations of the engineering diagrams on the computing system 102 via a plurality of software applications running on the user devices 122A-N.

The one or more data sources 120A-N are configured to store external information associated with each of user devices 122A-N, and the assets 108A-N. In an embodiment, the one or more data sources 120A-N may comprise a relational database (RDBMS), a cloud database, a file system and not only SQL (NoSQL) database. The one or more data sources 120A-N are encrypted to secure all data stored. In an example embodiment, one or more data sources 120AN may correspond to external agency databases, database of another technical installation, SCADA systems, other server database and the like.

As used herein the communication network 104, refers to, for example, any wired or wireless network such as the internet, an intranet, that implements Bluetooth^{®} of Bluetooth Sig, Inc., a network that implements Wi-Fi^{®} of Wi-Fi Alliance Corporation, an ultra-wideband communication network (UWB), a wireless universal serial bus (USB) communication network, a communication network that implements ZigBee^{®} of ZigBee Alliance Corporation, a general packet radio service (GPRS) network, a mobile telecommunication network such as a global system for mobile (GSM) communications network, a code division multiple access (CDMA) network, a third generation (3G) mobile communication network, a fourth generation (4G) mobile communication network, a fifth generation (5G) mobile communication network, a sixth generation (6G) mobile communication network, a long-term evolution (LTE) mobile communication network, a public telephone network, a local area network, a wide area network, an internet connection network, an infrared communication network, or a network formed from any combination of these networks.

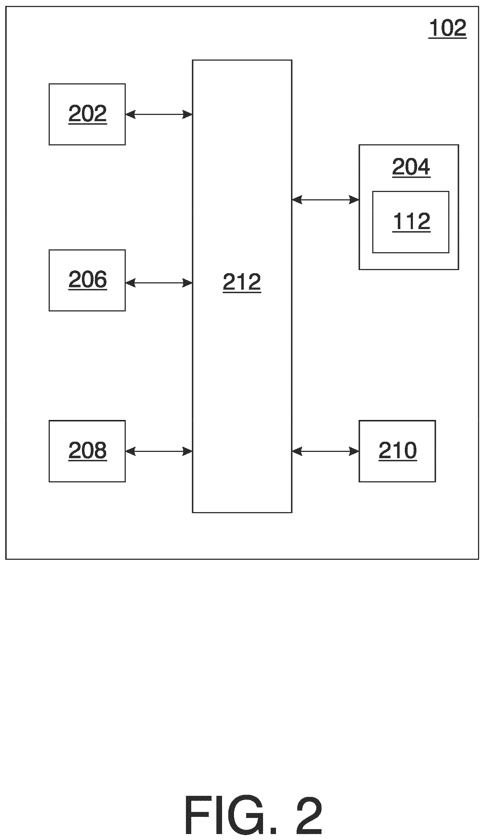

The computing system 102 comprises a digital representation generation module 112. The computing system 102 also comprise a processor, a memory, a storage unit, input output unit and a display unit. A detailed view of various components of the computing system 102 is shown in FIG 2. The computing system 102 may be a standalone system or a system on a cloud or an edge server. The digital representation generation module 112 is stored in the form of machine-readable instructions and executable by the computing system 102.

In an embodiment, the computing system 102 is configured for receiving one or more engineering diagrams associated with one or more assets 108A-N installed in a technical installation 106 from one or more data sources 120A-N. The one or more engineering diagrams comprises one or more components connected using one or more connectors. The one or more components represents the one or more assets 108A-N. The computing system 102 is configured for determining one or more regions of interest within the received one or more engineering diagrams by preprocessing the received one or more engineering diagrams. Further, the computing system 102 is configured for detecting a presence of the one or more connectors existing between the one or more components within the determined region of interest using a trained image processing model. The detected one or more connectors comprises a plurality of properties. Furthermore, the computing system 102 is configured for determining one or more patterns associated with the detected one or more connectors based on the plurality of properties of the one or more connectors, a type of the one or more connectors, and a position of the one or more connectors within the determined one or more regions of interest. The one or more patterns comprises one or more hyperparameter ranges corresponding to the detected one or more connectors.

Further, the computing system 102 is configured for detecting one or more connection paths existing between the one or more components based on the detected one or more connectors and the determined one or more patterns using the trained image processing model. The one or more connection paths comprises at least one connector connecting a source node to a target node in a specific pattern. Additionally, the computing system 102 is configured for generating a digital representation of the one or more engineering diagrams based on the detected one or more connection paths. Furthermore, the computing system 102 is configured for outputting the generated digital representation of the one or more engineering diagrams in a desired output format.

FIG. 2 is a block diagram of a computing system 102 such as those shown in FIG 1, depicting various components to implement embodiments of the present invention. In FIG 2, the computing system 102 includes a processor(s) 202, an accessible memory 204, a communication interface 206, a network interface 208, an input/output unit 210, and a bus 212.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like. he processor(s) 202 may also include one or more AI accelerators that can perform AI related processing using input data. Although referenced as an AI accelerator, it is sometimes referred as a neural network accelerator (NNA), neural network chip or hardware, AI processor, AI chip, and the like. The AI accelerator(s) can perform AI related processing to output or provide output data, according to the input data and/or parameters. An AI accelerator can include and/or implement one or more neural networks (e.g., artificial neural networks), and/or one or more storage devices.

Each of the above-mentioned elements or components is implemented in hardware, or a combination of hardware and software. For instance, each of these elements or components can include any application, program, library, script, task, service, process or any type and form of executable instructions executing on hardware such as circuitry that can include digital and/or analog elements (e.g., one or more transistors, logic gates, registers, memory devices, resistive elements, conductive elements, capacitive elements).

The memory 204 may be non-transitory volatile memory and non-volatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes a digital representation generation module 112 stored in the form of machine-readable instructions on any of the above-mentioned storage media and may be in communication with and executed by the processor(s) 202.

When executed by the processor(s) 202, the digital representation generation module 112 causes the processor(s) 202 to receiving one or more engineering diagrams associated with one or more assets 108A-N installed in a technical installation 106 from one or more data sources 120A-N. The one or more engineering diagrams comprises one or more components connected using one or more connectors. The one or more components represents the one or more assets 108A-N. The one or more engineering diagrams comprises at least one of an electrical wiring diagram, a piping and instrumentation diagram, circuit diagrams, Heating, Ventilation, and Air Conditioning (HVAC) diagrams, function diagrams, an engineering design of the technical installation 106 and a floor layout of the technical installation 106. The one or more engineering diagrams may be received in a specific format, for example, but not limited to, a pdf format. The one or more engineering diagrams may be received from one or more data sources 120A-N or from operators working at the technical installation 106 directly or from the one or more user devices 122A-N.

Further, the digital representation generation module 112 causes the processor(s) 202 to determine one or more regions of interest within the received one or more engineering diagrams by preprocessing the received one or more engineering diagrams. In determining the one or more regions of interest within the received one or more engineering diagrams by preprocessing the received one or more engineering diagrams, the digital representation generation module 112 causes the processor(s) 202 to filter the received one or more engineering diagrams using image processing models to determine the one or more regions of interest. Further, the digital representation generation module 112 causes the processor(s) 202 to classify the determined one or more regions of interest into one or more subnetworks based on the image processing models. The one or more subnetworks comprises the one or more components connected using the one or more connectors in a specific pattern.

In an example embodiment, the received one or more engineering diagrams are initially converted from a pdf format to an image format. The entire image may be classified into a plurality of images capturing the one or more sub networks. The one or more sub networks may be a portion of the engineering diagram depicting a partial interconnection of the one or more components.

Further, the preprocessing of the received one or more engineering diagrams requires the image format of engineering diagram to be of the best quality. The quality may be measured as a reciprocal of amount of noise elements present in the image. The noise is contributed by information that the image consists of. Such noise may include, for example, but not limited to, handwritten notes, borders of the image, signatures, text information, legends not related to the actual connections and the like. These noise elements are removed from the images using prior information about the image. Using Optical Character Recognition (OCR), the regions of text may be identified, using image processing algorithms. Further, the regions of interest may be estimated or determined and regions outside the area of interest may be removed or filtered. In some embodiments, tables or charts may be detected on the image. The main aim of the preprocessing activity is to remove as much noise as possible for the next process to achieve better accuracy. For the connector detection, only the actual drawing of the engineering diagram is relevant. In a preferred embodiment, the area of the relevant engineering diagram may be detected using a trained artificial intelligence (AI) system or model.

Further, the digital representation generation module 112 causes the processor(s) 202 to detect a presence of the one or more connectors existing between the one or more components within the determined region of interest using a trained image processing model.

The trained image processing model are used to analyze, manipulate, and extract meaningful information from images, including engineering diagrams such as P&IDs, circuit diagrams, or HVAC schematics. These models play a crucial role in automating the digitalization and analysis of such diagrams. Common image processing techniques applied to engineering diagrams may include filtering methods such as Gaussian or median filters. Such filtering methods are used to remove irrelevant noise, such as handwritten notes, image borders, or extraneous symbols. Alternatively, the other methods may include edge Detection algorithms such as, the Canny edge detector or Sobel filter to identify the boundaries of components and connections. Edge detection helps to clearly define the lines, shapes, and symbols in the diagram. Other method may include thresholding to convert grayscale images to binary images by setting pixel intensity thresholds, simplifying the diagram for further analysis by highlighting essential features like lines and components. Moreover, techniques such as dilation and erosion are used to refine the detected features, such as enhancing the connectivity of lines or removing small irrelevant details.

In an example embodiment, a bounding box or region of interest (ROI) in the context of engineering diagrams refers to a rectangular area that encapsulates specific elements or components of interest. This area may be a symbol, a part of a connection, or any other feature that requires focused analysis. Bounding boxes are essential for isolating key regions from a complex diagram to improve the efficiency and accuracy of image processing tasks. These are the primary uses of bounding boxes in engineering diagrams. Bounding boxes help to encapsulate symbols or components such as valves, pumps, and connectors, making it easier to analyze or classify them separately from the rest of the diagram. In order to prevent false line detections, text areas are identified and excluded using bounding boxes. Alternatively, bounding boxes may be used for OCR to extract important text annotations. ROIs are further used to divide the diagram into manageable sections or layers for processing individual elements, such as symbols, lines, or annotations, to simplify the overall analysis. Bounding boxes around junctions or intersections of lines may help identify critical connection points, ensuring accurate network construction between components. In summary, image processing techniques such as for example, but not limited to, noise reduction, edge detection, and OCR, combined with the use of bounding boxes or ROIs, are essential for efficiently and accurately extracting relevant data from engineering diagrams for automated digitalization and analysis.

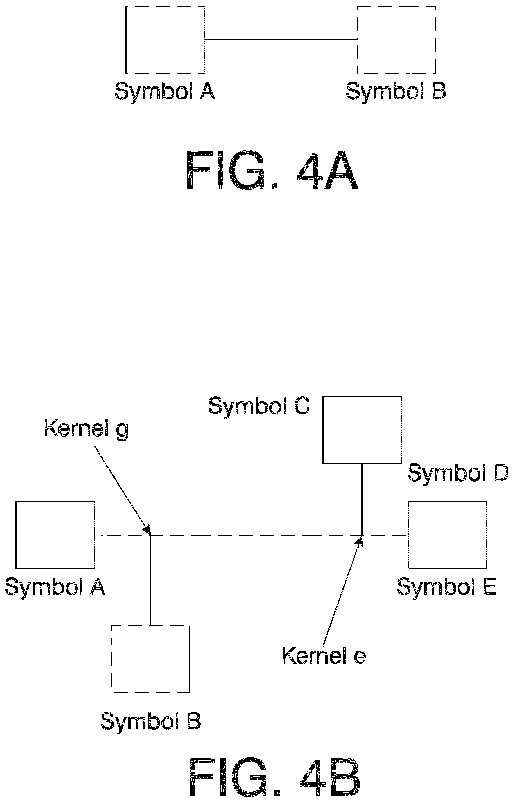

The detected one or more connectors comprises a plurality of properties. In detecting the presence of the one or more connectors existing between the one or more components within the determined region of interest, the digital representation generation module 112 causes the processor(s) 202 to identify at least one component from among the one or more components within each of the classified one or more sub-networks. In a given sub-network, usually a base component with minimal interconnection is considered to be a starting point or the source node. Alternatively, each components in the engineering diagram may be classified and prioritized based on the type of the components. For example, in a P& ID diagram, a process component such as pumps or vessels may be assigned a higher priority than piping components such as pipes or valves. In such a scenario, in a sub network comprising such components, the process component may be considered as a source node over the piping components. Alternatively, the source node may be any node which is then connected to one or more target nodes. In yet another alternate scenario, a source node may be determined based on a type of connection, for example, a simple connection or a complex connection. A detailed explanation of the simple connection and the complex connection is provided in FIGs. 4A-C.

Further, the digital representation generation module 112 causes the processor(s) 202 to determine a number of connectors connected to the identified source node by analyzing a respective area of the region of interest comprising the source node. For example, for each source node, there could be multiple lines connected to inlets of the components, or multiple lines connected to the outlets of the components. Each of these connections are determined for the same component.

The digital representation generation module 112 further causes the processor(s) 202 to detect a presence of a line connected to the source node using a Hough transformation model. Furthermore, the digital representation generation module 112 causes the processor(s) 202 to determine a direction of a connection path by evaluating the plurality of properties associated with the detected line. For example, if a junction is in right direction or if a line moves horizontally right, this direction is determined. Additionally, the digital representation generation module 112 causes the processor(s) 202 to detect a presence of a junction along the determined direction of the connection path using a graph traversal model. The junction comprises a merging node connecting two or more lines in a specific pattern.

In an example embodiment, the one or more connectors comprises lines and junctions (also referred herein as 'kernels' or 'merging node'). Each of the one or more connectors comprises the plurality of properties. The plurality of properties comprises coordinates, width, color, size, dimension, height, gap, direction, pattern (such as non-solid, arrow, or the like), component identifier, component type, component configuration parameters, component communication parameters and the like. Each connector type may have two end points, each connected to either a component or another connector. For example, a line may be connected to a source node at one end, which may be a component (for example, a symbol) and connected to another line to form a junction at the other end. The source node and the target node may be a starting component and an ending component connected in a specific manner using the one or more connectors.

To identify connections, it is crucial to identify the lines in the sub networks. This is achieved by performing the following steps. Initially, all lines in the sub networks are identified using Hough transformation. In certain cases, the Hough transformation is performed twice on certain images. For example, once on the pure black and white image and once on an image where edges have been filtered first by for example, but not limited to, a canny transformation.

In order to identify non-solid lines, a line a gap in size of the distances is allowed. Further, all text boxes and detected images from the diagram are removed to reduce the number of false detected lines. All lines are detected using for example, but not limited to, Hough transformation. For each line, the properties such as the width, the color and if it is non-solid are identified. In case that the original lines have been removed by the bounding boxes, or regions of interest while preprocessing the images, such lines are repaired by replacing such deleted lines with a similar line. The result of performing the Hough transformation is a list of all lines (with respective properties, such as for example, coordinates, width, color, pattern, or the like) that may then be used to divide the image into different layers to simplify the later detection.

Further, in an example embodiment, a plurality of images corresponding to bounding boxes highlight a certain region of the engineering diagram or may comprise the bounding box as a substitute for a symbol, which may not be a part of standardized catalogue. In such a case, the lines are classified based on its type, for example, vertical lines, horizontal lines, and other lines. Further, horizontal lines which are having almost the same length and almost the same (+-2 pixels) x coordinates are determined. Further, it is checked in the list of vertical lines if two lines connecting each other and forming a rectangle exists. In some cases, the bounding boxes may have parallel lines to the contour, such as for example, like a table. To identify them, the remaining lines are validated to check if they are having the same length than the parallel contour line and if they fully are contained in the bounding box. AI methods are used to identify the area of interest or bounding boxes and therefore reduce the number of false lines detected. Different models may be used as a plug and play option to provide extra information, using which accuracy is improved. The nature of dependency on text and component extraction makes this computing system 102 best suited for adding as an extra layer to complete the information already extracted from P&ID diagrams.

The Hough Transformation is a feature extraction technique used in image analysis and digital image processing for detecting simple geometric shapes such as lines, circles, and ellipses. In the context of engineering diagrams such as P&IDs, the Hough transformation model is specifically useful for detecting lines within noisy or complex images. The method works by transforming points in the image into a parameter space and searching for patterns that correspond to straight lines. This allows for the identification of lines that are otherwise difficult to detect, even if they are incomplete or obscured.

In applications such as P&ID digitization, the Hough Transformation model is used to identify all lines (solid, dashed, and the like), enabling the detection of interconnections between components.

The digital representation generation module 112 further causes the processor(s) 202 to determine one or more patterns associated with the detected one or more connectors based on the plurality of properties of the one or more connectors, a type of the one or more connectors, and a position of the one or more connectors within the determined one or more regions of interest. The one or more patterns comprises one or more hyperparameter ranges corresponding to the detected one or more connectors. The one or more hyperparameter ranges comprises a kernel size, a minimal length, a maximum gap, angle resolution, connector types, distance resolution, and number of votes. The one or more patterns comprises non-solid lines, colored lines, cross connections, and the like.

In an example embodiment, one of a major challenge for the identification of interconnections is crossing lines. The crossing lines usually exist by connecting specific components and crossing over different layers. In step one, the digital representation generation module 112 further causes the processor(s) 202 to obtain the information about these elements using image processing tools. Further, an AI object detection model is trained for detecting the crossings lines and connectors. The crossing lines or connectors may have different meaning based on different domains or different engineering tools. Additionally, the multiple connectors may refer to a same logical instruction. In such a case, a domain rule is used to group and identify the crossing lines and the connectors. For example, such domain rule may indicate a path traversing rule which helps to detect the connections between components.

Further, the digital representation generation module 112 further causes the processor(s) 202 to detect one or more connection paths existing between the one or more components based on the detected one or more connectors and the determined one or more patterns using the trained image processing model. The one or more connection paths comprises at least one connector connecting a source node to a target node in a specific pattern.

Further, in detecting the one or more connection paths existing between the one or more components, the digital representation generation module 112 further causes the processor(s) 202 to determine an interconnection between the one or more components within each of the classified one or more sub networks based on a type of the detected one or more connectors and the determined one or more patterns using the trained image processing model. Further, the digital representation generation module 112 further causes the processor(s) 202 to classify the interconnection into one of a simple connection and a complex connection based on the determined type of the interconnection. The simple connections are cases where a single line segment connects between two symbols (also referred herein as components). The complex connections involve cases where a network may have multiple symbols at the ends of the network (as shown in FIGs. 4A-C).

In case the interconnection is a simple connection, then the digital representation generation module 112 causes the processor(s) 202 to determine the source node as a starting point based on the classified interconnection. Further, the digital representation generation module 112 causes the processor(s) 202 to determine at least one of the lines and the junction connected to the determined source node in a specific pattern. Additionally, the digital representation generation module 112 causes the processor(s) 202 to determine the plurality of properties of the determined at least one line and the junction. Moreover, the digital representation generation module 112 further causes the processor(s) 202 to determine a presence of the target node on at least one end of the line by traversing along the direction of the determined at least one line and the junction using a graph traversal model. The line corresponds to one of an individual line and a line belonging to the junction. Also, the digital representation generation module 112 causes the processor(s) 202 to generate the connection path from the determined source node to the target node based on the determined plurality of properties and the determined one or more patterns of the line and the junction. In case of a simple connection, the presence of lines is detected, and it is determined whether any symbol is present along the line on either end.

In case the interconnection is a complex connection, then the digital representation generation module 112 causes the processor(s) 202 to determine whether the determined interconnection corresponds to the complex connection. Further, the digital representation generation module 112 causes the processor(s) 202 to determine whether the complex connection comprises at least one cross connection between at least two connectors. The cross connection refers to a first line crossing over a second line without making a contact to the second line. Further, the digital representation generation module 112 causes the processor(s) 202 to detect at least one of full lines and non-solid lines within the determined one or more regions of interest by applying a first cross connection detection model on an original image of the engineering diagram.

The first cross connection detection model may be a trained AI model. In some example embodiments, object detection models with different categories or segmentation models may be used as trained AI models. The trained AI models specifically detects only the cross connections or may be an image analytics based kernel convolution on top of a given image. Further, the digital representation generation module 112 causes the processor(s) 202 to generate a manipulated image of the original image by extending the detected non-solid lines into full lines using a line detection model like Hough line model and then using the endpoints of the line segment, an entire line is constructed. Further, the digital representation generation module 112 causes the processor(s) 202 to detect the full lines in the manipulated image by applying a second cross connection detection model on the manipulated image, The extended non-solid lines are treated as full lines. Further, the digital representation generation module 112 causes the processor(s) 202 to compare the detected full lines from the original image with the detected full lines from the manipulated image to identify deviations. The deviations may include for example, but not limited to, lines hidden between objects and labels. Further, Further, the digital representation generation module 112 causes the processor(s) 202 to determine actual non-solid lines in the original image based on the identified deviations. The actual non-solid lines are determined by filtering the full lines detected in the original image from the full lines detected in the manipulated image. In an exemplary embodiment, certain engineering diagrams comprises full lines and non-solid lines crossing. A kernel appears as an intersection. A solution to detect such line crossing or full lines is to execute AI model twice, once on the original image and once on an image where the non-solid lines are extended to full lines (for example, by using a Hough transformation allowing lines with gaps). After identifying the lines, all lines may be replaced by full lines by applying the AI models are applied on the manipulated image to reduce the noise in the lines. Furthermore, connections are identified sequentially. Therefore, the detected lines are subtracted to reduce the noise for the next connection

In an example embodiment, for the complex connections, initially any random kernel is detected, and such kernel is traversed in a left, a right and a bottom direction depending on the kernel type. In such an example, the number of connections of the kernel may vary in number and direction. Further, one or more symbols connected to each end of the kernel are detected. It is also determined whether there exists one more kernel in the path of the first kernel. If yes, then the second kernel is again traversed in top, left, bottom and right direction until the target symbol or node is detected. Later, each of the detected symbols, path traversed, and kernels are associated to the entire network. A detailed view of the complex connection is shown in FIGs. 4A-C.

Overall, for complex connection, first step involves prediction of kernels (kernel types vary based on the way two or more lines are intersecting). Next step involves finding the associated complex connection through graphical search method as described above.

In an example embodiment, the interconnection is identified via traveling the lines. For example, the identified lines are grouped based on the properties such as for example, color, width, and a type of the lines. The grouping is performed using the properties determined related to the identified lines on the P&ID diagram. In case different lines are a part of same connection, the linking of those lines is performed into same groups. Once the linking has been performed, the groups of lines are plotted on the image along with the components. Then, the layers of connection components are formed based on the interlinking. Further, these layers are merged to obtain overall connection information regarding the engineering diagrams.

Furthermore, the digital representation generation module 112 causes the processor(s) 202 to generate a digital representation of the one or more engineering diagrams based on the detected one or more connection paths. The digital representation comprises visual representation of the one or more engineering diagrams. The visual representation comprises an image, or a graphical representation or an ontological representation of the one or more engineering diagrams. Alternatively, the digital representation comprises a machine-readable format executable by one of a local system and a third party system using Application Programming Interfaces (APIs). The machine-readable format comprises a software code, a program, or an instruction executable by the local system or the third party system.

In an example embodiment, in generating the digital representation of the one or more engineering diagrams based on the detected one or more connection paths, the digital representation generation module 112 causes the processor(s) 202 to generate sub-digital representations for each of the one or more sub networks of the one or more engineering diagrams. The sub-digital representations may be sub-images or sub-code relevant to the part of the engineering diagram. The digital representation generation module 112 causes the processor(s) 202 to correlate each of the generated sub-digital representations with the received one or more engineering diagrams. The digital representation generation module 112 causes the processor(s) 202 to determine logical interconnections between the one or more components within each of the one or more sub-more networks based on the correlation.

Further, the digital representation generation module 112 causes the processor(s) 202 to generate a consolidated digital representation of the one or more engineering diagrams based on the determined logical interconnections.

In an example embodiment, the digital representation generation module 112 causes the processor(s) 202 to identify types of the one or more components within the determined one or more regions of interest. Further, the digital representation generation module 112 causes the processor(s) 202 to assign a label to each of the identified types of the one or more components based on a prestored component table. For example, a label comprises a component type, component name, component configuration and the like. Further, the digital representation generation module 112 causes the processor(s) 202 to generate the digital representation of the one or more engineering diagrams with the assigned label.

Furthermore, the digital representation generation module 112 causes the processor(s) 202 to output the generated digital representation of the one or more engineering diagrams in a desired output format. In outputting the generated digital representation of the one or more engineering diagrams in the desired output format, the digital representation generation module 112 causes the processor(s) 202 to transform the generated digital representation of the one or more engineering diagrams into a visual representation to be displayed on a user interface of a user device 122A-N. The visual representation comprises an image, or a graphical representation or an ontological representation of the one or more engineering diagrams. Further, the digital representation generation module 112 causes the processor(s) 202 to transform the generated digital representation of the one or more engineering diagrams into a machine-readable format executable by one of a local system and a third-party system using Application Programming Interfaces (APIs). The machine-readable format comprises a software code, a program, or an instruction executable by the local system or the third party system.

In a preferred embodiment, the digital representation generation module 112 causes the processor(s) 202 to obtain a real-time feedback data for the generated digital representation from a user. The user may be for example, but not limited to, an operator at the technical installation 106. Further, the digital representation generation module 112 causes the processor(s) 202 to validate the generated digital representation of the one or more engineering diagrams based on the obtained real-time feedback data and prestored rules.

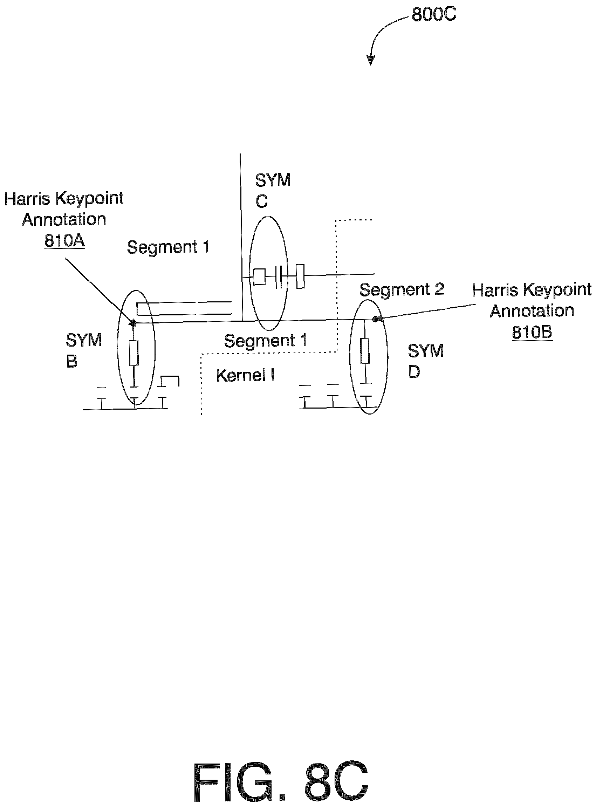

In validating the generated digital representation of the one or more engineering diagrams based on the obtained real-time feedback data and the prestored rules, the digital representation generation module 112 causes the processor(s) 202 to segment one or more regions of the digital representation comprising the obtained real-time feedback data. The obtained real time feedback data comprises a human-annotated portion of the digital representation. Alternatively, the real-time feedback data may also be learned and obtained through an AI based feedback loop, which constantly learns from the outputted digital representations, versions of the digital representations updated at real-time and improve the training data. Further, the digital representation generation module 112 causes the processor(s) 202 to identify one or more kernels along the segmented one or more regions of the digital representation using a corner point detection technique. In an example embodiment, the corner point detection technique may include for example, but not limited to, a Harris key point detection method. A detailed overview of this method is explained in FIG. 8C. Further, the digital representation generation module 112 causes the processor(s) 202 to determine whether each of the identified one or more kernels represent a valid corner based on a horizontal pixel extension and a vertical pixel extension i.e, how far the horizontal and vertical lines cut across each other.In an exemplary pixel discontinuity images, because of the variation of pixel discontinuities, a h kernel may be identified as I kernel. Hence, if the user marks the connection as wrong, based on the wrong pixel extension, the method may automatically correct them as h kernel.

Furthermore, the digital representation generation module 112 causes the processor(s) 202 to determine a best suitable kernel from among the one or more kernels based on the determination. The best suitable kernel is determined by correlating the one or more kernels with one or more pre-stored kernels. Further, the digital representation generation module 112 causes the processor(s) 202 to tune the plurality of properties associated with the best suitable kernel using a machine learning model. The plurality of properties may include color, width, distance, direction, dimension, angle, and the like. Further, the digital representation generation module 112 causes the processor(s) 202 to update a kernel database with the tuned plurality of properties associated with the best suitable kernel.

In an example embodiment, once the digital representation is validated using real time feedback data, the digital representation generation module 112 causes the processor(s) 202 to determine one or more errors associated with the generated digital representation based on the results of validation.

The one or more errors comprises at least one of missing connectors, missing connection paths, missing components, false connectors, false connection paths, and false components. For example, there could be false lines, missing lines, missing kernels, missing symbols, false connection paths, or the like. In certain cases, the errors may be due to improper domain reference. The computing system 102 achieves generalization across different domains and customers to enable effective usage of the interconnection detection across business. The patterns of the interconnections differ with different domains. Once the properties or hyperparameter ranges are optimized and fine-tuned, specific errors related to difference in domain may be resolved.

Further, the digital representation generation module 112 causes the processor(s) 202 to tune the one or more hyperparameter ranges for the generated digital representation based on the determined one or more errors. The one or more hyperparameter ranges comprises a kernel size, a minimal length, a maximum gap, angle resolution, connector types, distance resolution, and number of votes. The model/process is based on image processing, as the images comprise different resolution and certain properties of connectors and components such as line and symbols may be different. Hence, based on Human annotation or real time feedback, these hyperparameters are tuned for both simple and complex connections which may essentially work for different use cases. For simple connections, these include Hough's transformation rules such as for example, but not limited to, minimal length, maximum gap, different patterns for non-solid lines, and the like. For complex connections, a logic to find an optimum kernel size with inputs from Human annotation is available. This feature provides extra coverage of different scenarios that may arise while handling P&ID diagrams from different vendors. Additionally, the digital representation generation module 112 causes the processor(s) 202 to generate an updated digital representation of the one or more engineering diagrams based on the tuned one or more hyperparameter ranges.

In another preferred embodiment, the digital representation generation module 112 causes the processor(s) 202 to generate one or more recommendations for rectifying the one or more errors associated with the generated digital representation using an artificial intelligence-based model. The one or more recommendations comprises adding a new kernel type, adding a new form of connector, defining a new component, rectifying the identified connector, identifying missed connector or component or the like.

In yet another preferred embodiment, the digital representation generation module 112 causes the processor(s) 202 to analyze each of the interconnections between the one or more components based on a machine learning model. Further, the digital representation generation module 112 causes the processor(s) 202 to generate a logical interpretation for each of the analyzed interconnections based on the type of the interconnection, type of the one or more components, a domain type of engineering diagram, one or more parameters associated with the one or more components and the real-time feedback data. The logical interpretation comprises information relating to the one or more components, type of interconnections, sub network information, and connector information.

The storage unit 206 is configured for storing the engineering diagrams, and digital representation models.

The communication interface 208 is configured for establishing communication sessions between the one or more user device 122A-N and the computing system 102. The communication interface 208 allows the one or more engineering applications running on the user devices 122A-N to import/export digital representations into the computing system 102. In an embodiment, the communication interface 208 interacts with the interface at the user devices 122A-N for allowing the engineers to access the digital representations of the asset information and perform one or more actions on the digital representations stored in the computing system 102.

The input-output unit 210 may include input devices a keypad, touch-sensitive display, camera (such as a camera receiving gesture-based inputs), and the like. capable of receiving one or more input signals, such as user commands to process asset data. Also, the input-output unit 210 may be a display unit for displaying a graphical user interface which visualizes the engineering diagram and also displays the status information associated with each set of actions performed on the engineering diagram. The set of actions may include data entry, data modification or data display. The bus 212 acts as interconnect between the processor 202, the memory 204, the storage unit 206 and the input-output unit 210.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted.

The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a computing system 102 as is unique to the present disclosure or necessary for an understanding of the present disclosure is depicted and described. The remainder of the construction and operation of the computing system 102 may conform to any of the various current implementation and practices known in the art.

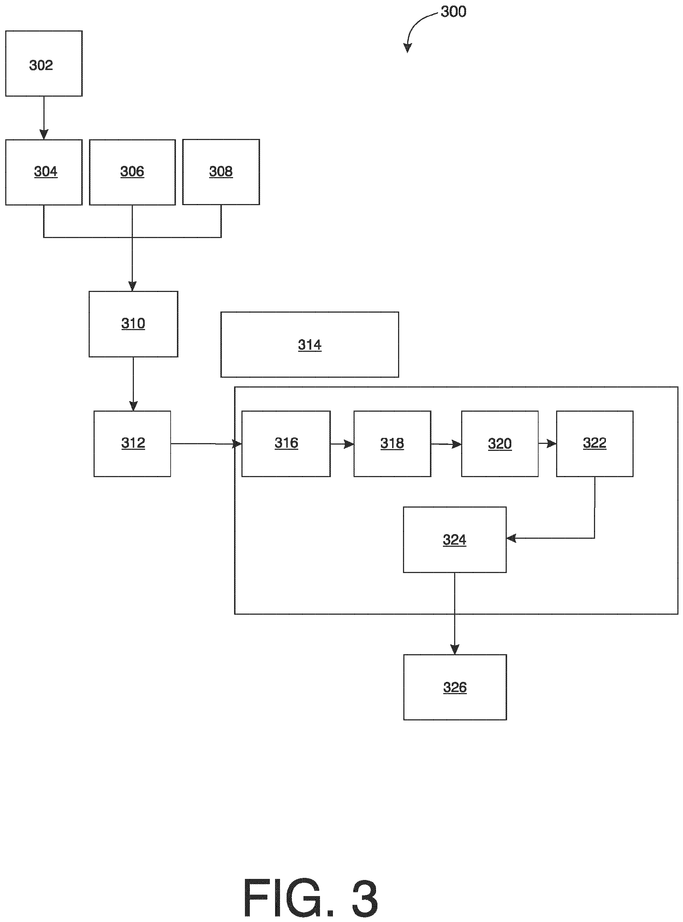

FIG 3 is a block diagram depicting a data flow within a digital representation generation module 112, such as those shown in FIG 1 and 2, capable of detecting presence of the one or more connectors existing between the one or more components within the determined region of interest according to the embodiment of the present invention. The process involves multiple steps, including image extraction, line detection, and the identification of connections between components. Initially, the process starts by receiving a PDF document 302 that comprise the technical diagram, such as a piping and instrumentation diagram (P&ID) or another schematic representation of an engineering system. The PDF is converted to an image 304 format, as image processing techniques are used in subsequent steps to extract relevant features from the diagram. After the image 304 is generated, the computing system 102 extracts two key types of information, component position information 306 and text position information 308. The component position information 306 identifies the positions of various components (for example, but not limited to, valves, pumps, sensors, or the like) depicted in the image. The text position information 308 identifies text elements, such as labels, annotations, and legend, providing critical metadata about components and connections. Further, the non-essential elements such as text, component symbols, borders, and other irrelevant content are removed at step 310 from the image to focus on the lines representing asset connections. The removal process 310 ensures that only the relevant structural elements (lines) remain for further analysis. This provides a way to extract the most accurate information from the engineering diagram, such as for example, a P&ID. Using color information of the lines, multiple networks merging in one may be eliminated. This is possible because each layer has information about only one color of line and no other connections may be detected. This allows the extraction from multicolored images possible with high accuracy. At present most conventional industries are using colored diagrams to show plurality of types of connection or plurality of properties of the connection. The property associated with the lines may be extracted and may be used to describe the information with high accuracy.

The filtered image is then processed to detect lines at step 312, which represent the flow paths or wiring between the components. These lines are typically pipelines, electrical connections, or signal pathways, depending on the type of diagram. The step 312 of line detection is a crucial step in identifying the overall system structure and interconnections. Further, at step 314, connections are detected for each type of line in the engineering diagram. Different line types (for example, but not limited to, solid, dashed, non-solid or the like) represents plurality of kinds of connections (for example, but not limited to, physical, control, or informational or the like). The computing system 102 processes each line type separately to avoid confusion between unrelated pathways. After detecting the lines, the computing system 102 draws the lines at step 316 with their associated components, effectively isolating the lines that are related to system components. This step helps clarify the actual structure of the one or more assets 108A-N by excluding unrelated lines or text. The next step 318 involves detecting kernels or junctions, which represent the key points or junctions where multiple lines intersect or connect to a component. Kernels are critical for understanding how various parts of the technical installation 106 are linked together. Once the kernels are detected, the computing system 102 travels through the kernels at step 320 to trace how lines connect across these junctions. This process determines the flow or signal paths in the engineering diagram by following the connections between components through these key points. After traveling through the kernels, the computing system 102 at step 322 builds the connections between the components and the lines. This step 322 constructs the network of connections based on the relationships identified between the components and the lines connecting them. In some cases, irrelevant or incorrect connections may be falsely identified at step 324 during the line detection and connection process. This step 324 removes irrelevant connections to ensure that only valid, meaningful connections remain. At step 326, the final output of the process is generated as the node connections. This represents a validated and accurate map of how the components in the engineering diagram are connected through the lines and kernels, providing a complete picture of the asset's layout and interconnections.

FIGs 4A-C are schematic representations of a plurality of types of connectors existing between one or more components of the technical installation such as those shown in FIG. 1, according to an embodiment of the present invention. FIG. 4A depicts a simple connection, where symbol A is connected to symbol B via a line. In such a simple connection, the presence of lines is first detected and then it is determined if any symbol is present along the line on either end. FIG. 4B depicts a complex connection. The complex connections involve cases where a network have multiple symbols or lines which are not straight at the ends of the network.

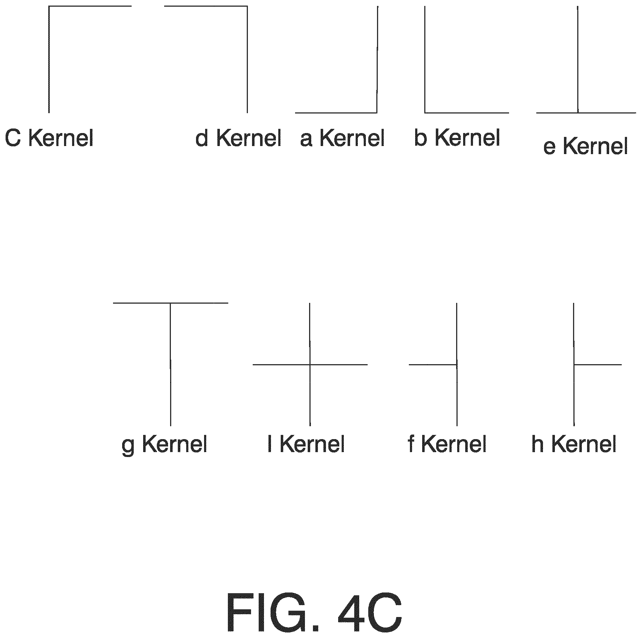

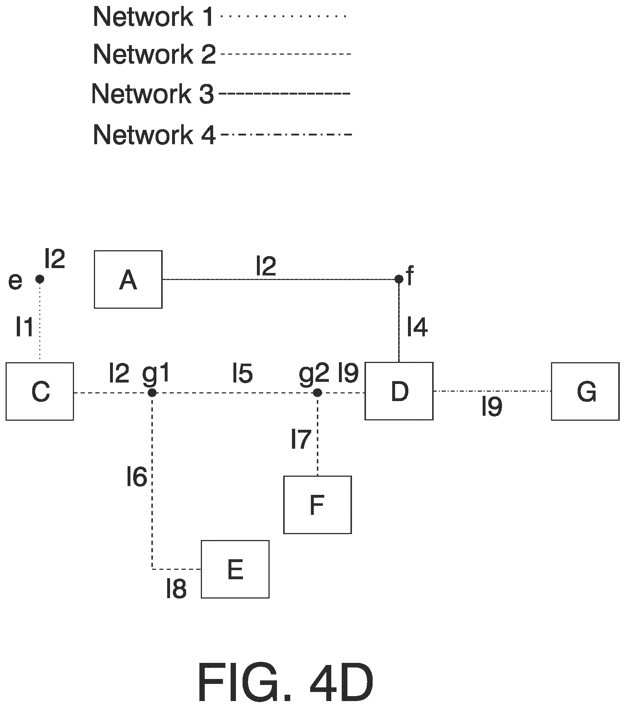

For the complex connections, with the case shown in the FIG. 4B, graphical search method or graph traversal method involves determining any random Kernel g initially, and traverses in left, right and bottom direction based on the type of a kernel. For example, Kernel g type and properties may be predefined. Therefore, the identified kernel is compared with a prestored kernel to determine the type of kernel and its properties. Further, the graphical search method or graph traversal method involves detecting Symbol A, Symbol B and Kernel e. Finally, from Kernel e, the method traverses again in top and right direction based on the type of the kernel. Further, the method then detects Symbol D. The method then associates the Symbols A, B, C, D and E to the entire network comprised of line segments traversed. Overall, for complex connection, first step involves prediction of kernels (kernel types vary based on the way two or more lines are intersecting). Next step involves determining the associated complex connection through graphical search method as described above. FIG. 4C depicts a plurality of type of kernel, comprising c kernel, d kernel, a kernel, b kernel, e kernel, g kernel, i kernel, f kernel, h kernel and the like. Each of these types of kernels may have specific pattern, and specific properties. These types of kernels may be prestored or predefined within the computing system 102. FIG. 4D depicts a plurality of sub networks within the engineering diagrams comprising either simple connections or complex connections. For example, symbols A to B are connected using Network 3, and symbols A to C are connected using Network 1. Further, symbols D to G comprises a simple connection using Network 4 and the like.

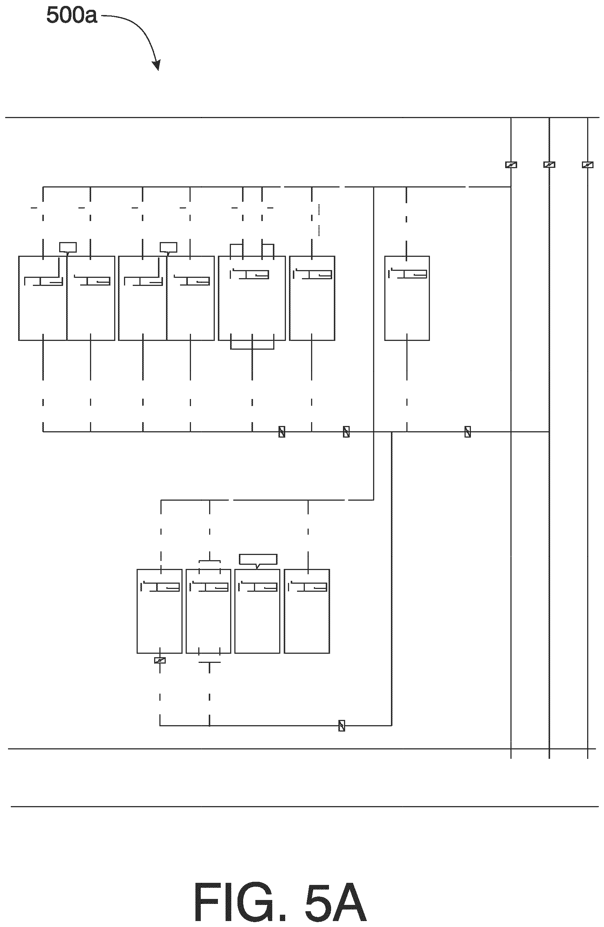

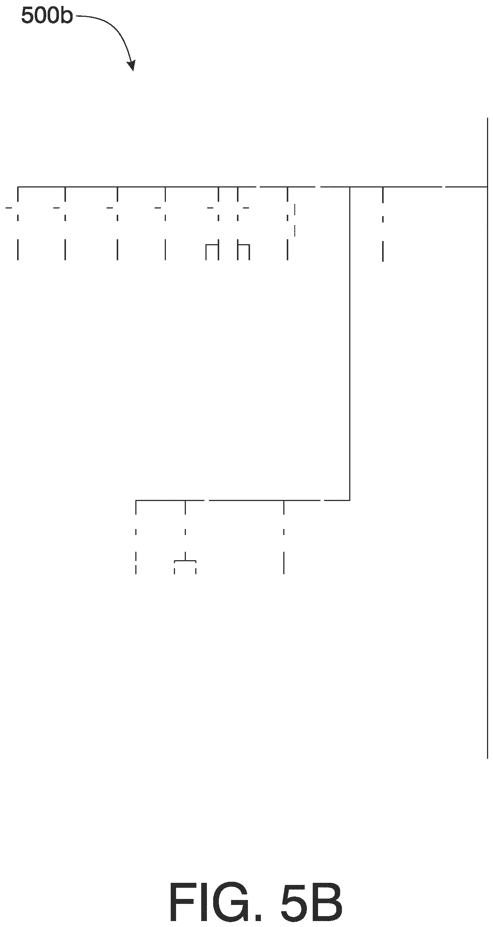

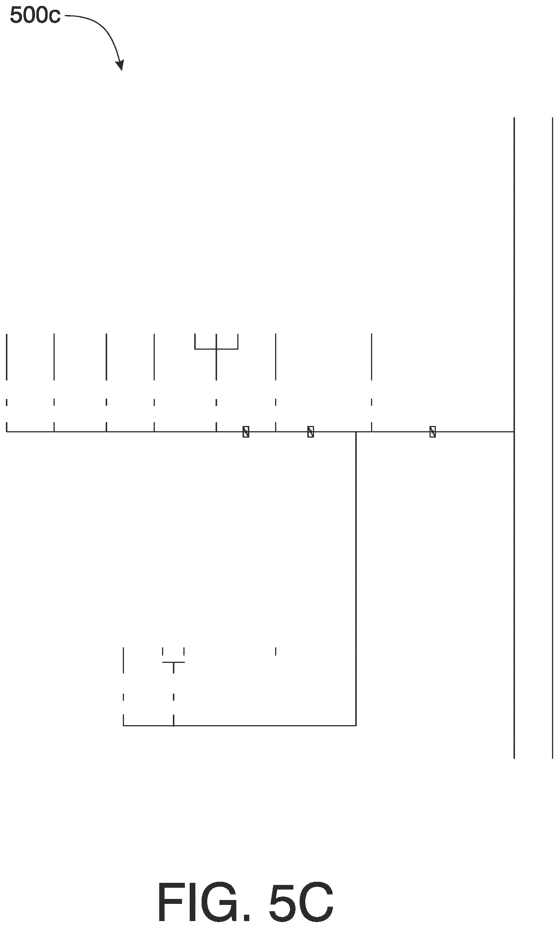

FIGs 5A-C are screenshots depicting exemplary graphical user interfaces for generating digital representations of one or more engineering diagrams, according to the embodiment of the present invention. FIG. 5A depicts a filtered image of the engineering diagram after preprocessing the original image. The text and other noise sources are removed from the original image to generate the filtered image. FIG. 5B depicts a color-based line extraction in the filtered image. FIG. 5B depicts only pink line detected in the PID. For a given image, a plurality of color layers is extracted. FIG. 5C depicts an image showing other lines that is also present in the image. The image comprises a plurality of line types. This image is then used for the identification of the plurality of lines in the plurality of networks.

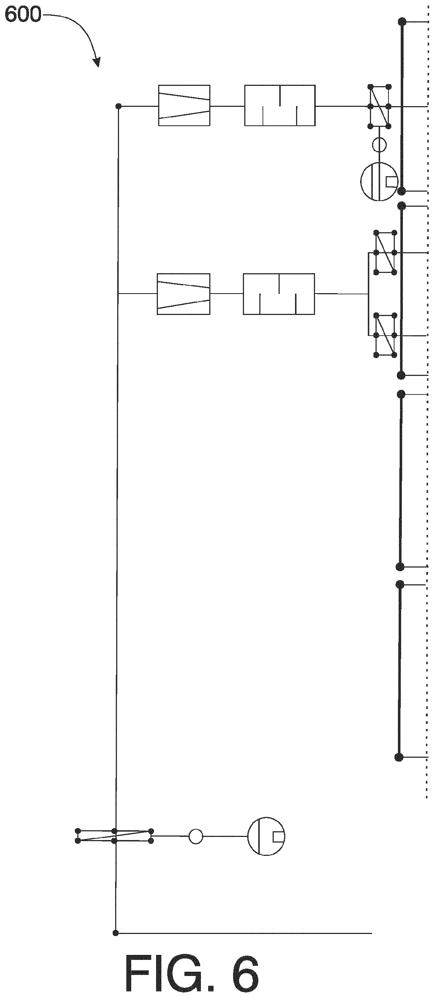

FIG 6 is a schematic representation of an example P & ID depicting nodes used for path traversal within a sub-network, according to an embodiment of the present invention. The nodes (in red color) are used for traveling the network. For example, each connection (or interconnections) is classified into simple and complex connections.

For each connection, a source node, a merging node, and a target node is identified along the with the connectors used for connecting these nodes.

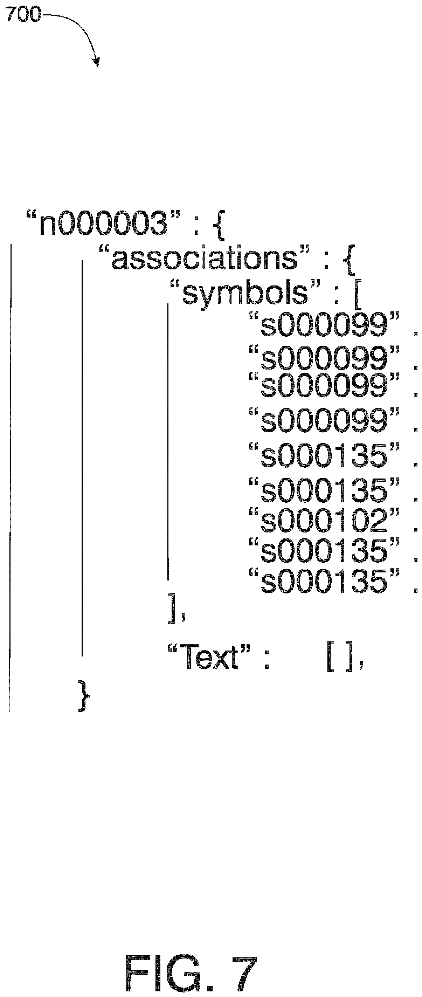

FIG 7 is a schematic representation of an exemplary digital representation generated as a machine-readable code, according to an embodiment of the present invention. The digital representation may be outputted in a form of a machine-readable code. The machine-readable code may be for example, but not limited to, a Json format. The machine-readable code may be executable by one of a local system and a third-party system using Application Programming Interfaces (APIs). The machine-readable code may be used by the other systems to develop for example, knowledge graphs, or other AI-based insights to understand and analyze the engineering diagrams.

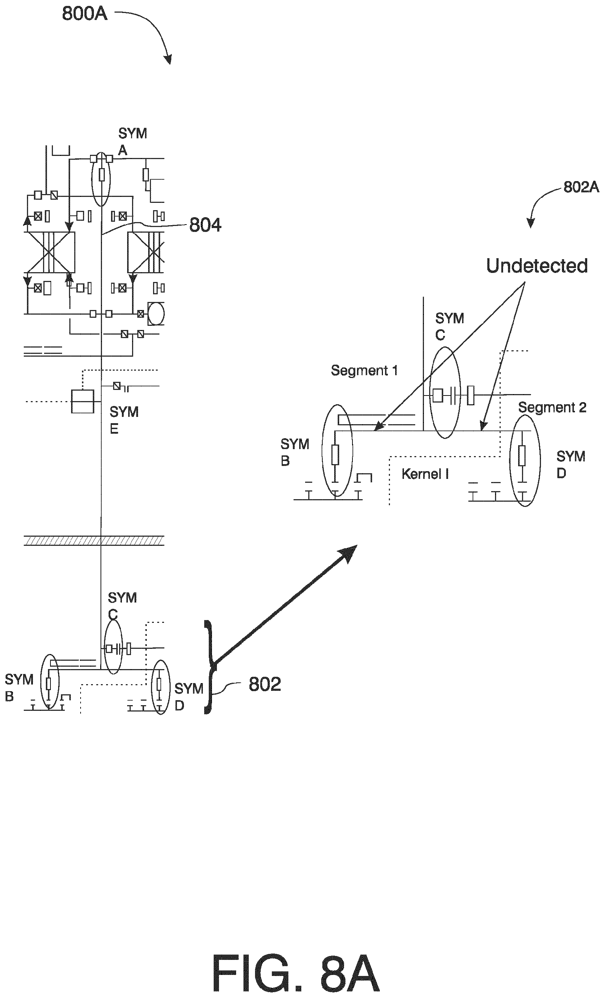

FIGs 8A-D are schematic representations of example sub networks of P & ID with detected one or more errors, according to an embodiment of the present invention. A feedback learning model is required to learn from human annotation corresponding to simple connections and complex connections to improve accuracy in a dynamic environment. FIG. 8A depicts missed segments of complex connections within a sub network of an engineering diagram. As shown in FIG. 8A, a connection network exists between symbols SYM A, SYM B, SYM C, SYM D and SYM E. However, the detection model predicts only the red lines 804 as detection (or detected lines) and some of the actual connections 802 and 802A remain missing (undetected lines). In one scenario, a Human annotator may annotate and identify these errors. In another scenario, the computing system 102 may itself validate the digital representation and identify these errors. In any case, the computing system 102 updates the remaining connections 802A, that is Kernel I to SYM B (segment 1) and SYM C (segment 2), and then relearns from the missed connection, by assessing the annotated connection or corrected connection. In an example embodiment, Kernel I à Kernel C à Sym B (segment 1) and Kernel I à Kernel D à Sym D (segment 2) are not detected. However, it is assumed that there is an annotation that is received as feedback (violet dashed lines) during a review stage. From these annotations, as it is known that a connection through these kernels/symbols exists, the reasons for miss in the connections is determined. The reason may be due to missed detection of kernels Kernel C, Kernel D.

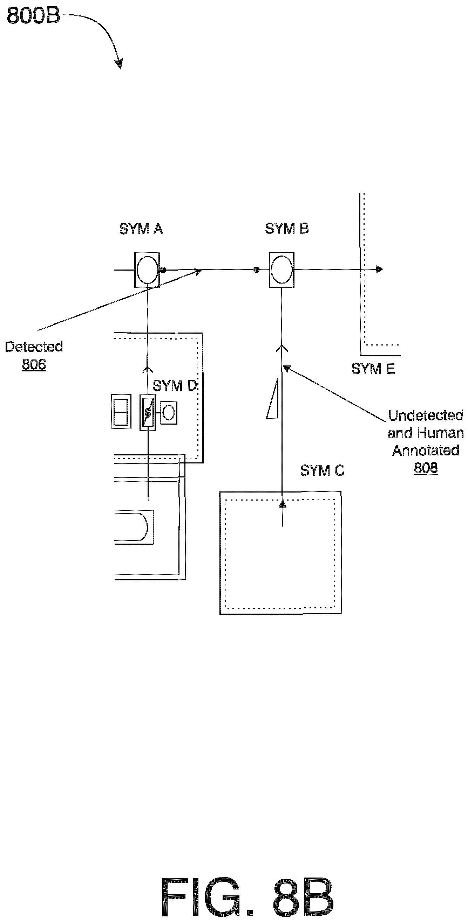

FIG. 8B depicts a missed simple connection. In this figure, there are multiple simple connections between symbols i.e., from SYM A to SYM B, SYM B to SYM C, SYM A to SYM D and SYM B to SYM E.

However, the computing system 102 predicts only SYM A to SYM B 806, SYM A to SYM D while the connection from SYM B to SYM C 808 and SYM B to SYM E are not detected. In one scenario, a Human annotator may annotate and identify these errors. In another scenario, the computing system 102 may itself validate the digital representation and identify these errors. In any case, the computing system 102 learns about the missed connection based on Human annotation or real time feedback. A feedback learning model is required to learn from human annotation corresponding to simple connections and complex connections to improve accuracy in a dynamic environment. Feedback learning for Simple connections is performed as follows. SYM B to SYM C and SYM B to SYM E are not detected. However, it can be assumed that there is an annotation that is received as feedback (violet dashed lines) during a review stage. From these annotations, as it is known that a line exists between the above symbols, the reasons for the miss may be mainly due to Hough line parameters, or hyperparameter ranges, such as rho r distance resolution, angle theta angle resolution etc. Therefore, the computing system 102 determines optimal values of hyperparameter ranges to ensure the line detection in the above case. The optimal values of hyperparameter ranges are stored in the database. Based on the results from multiple images, heuristically say n (based on the image variations), a mean of values for each variable may be available. As a next step, after the annotations to multiple images are received, the current deterministic Hough detection model is updated to a probabilistic Hough detection model covering a range of values between +/- 1SD from the mean for the above three variables (such as for example, radius r, angle theta and no of votes n).

FIG. 8C depicts a detection of Harris Key point from the human annotations received. In an example embodiment, missing of kernels C and D may be corrected in the following manner. The computing system 102 segments or separates only the human annotated portion of the digital representation. Further, the computing system 102 determine the key points 810A and 810B using "Harris corner point detection" along the annotated portion (as shown in FIG. 8C). For each of the key points 810A and 810B, it is determined if it is a real corner considering the horizontal and vertical extension of the pixels along the legs (to filter some more false key points). Further, the computing system 102 determines a local window around the key points 810A-B and perform correlation with existing kernels for best match. Furthermore, the computing system 102 identifies the kernel detected as a given type. For example, both the identified key points 810A-B are detected as "c-kernels". Further, the computing system 102 optimizes the current c-kernel (the width/height) till the computing system 102 detects (machine learning approach) such new type of kernels and add the kernels to the variety of c-kernels for future detection.

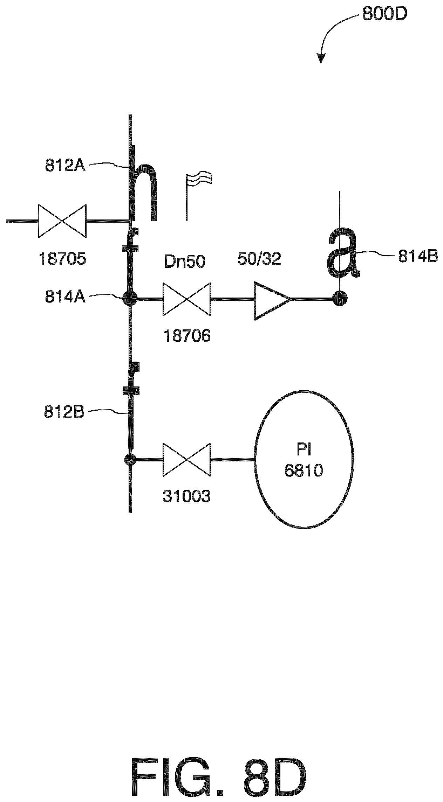

Finally, after some n images (value of n is based on the diversity of the kernel list), the computing system 102 obtains the filters corresponding to the c-kernels that have been commonly missed and add them to the current c-kernel list. In this manner, all general misses are added to the kernel database. Alternate way to learn the kernel types from the annotations are to geometrically determine the connection kernel type (using line equations) and henceforth add the kernel database to the corresponding type. A sample result for kernel type is shown in FIG. 8D.

The Harris Key Point detection method is used to identify "corner" points or key points in an image, which are regions where there is a significant change in gradient in both directions. This method is especially valuable in tasks requiring accurate localization of specific features. In the context of engineering diagrams, Harris key point detection may be applied to identify critical points such as connectors or intersections of lines where multiple elements meet. These key points may aid in recognizing the junctions between various components, making it easier to establish connections and network layouts within the diagram.

FIG. 8D depicts a comparison of new kernel points detected (814A-B) after human annotations compared with existing kernels (812A-B). The kernel types are deduced from geometrical formulation of intersecting lines. For example, 812A and 812B denotes a specific kernel types or patterns such as, for example, but not limited to, pattern "h", pattern "f", and the like. The green points 812 A-B correspond to kernels that were detected by the kernel convolution method. The blue points 814A-B correspond to kernels/kernel types that were detected once the lines are annotated. For example, 814A-B denotes a specific kernel types or patterns such as, for example, but not limited to, pattern "a" and the like. Finally, these kernels images may be added to the kernel database for future detections. A possible result that is outputted out of the active/feedback learning algorithm is shown in FIG. 8D. The blue points 814A-B are re-detected kernels after learning from human annotations where green points 812A-B are original kernels. Hence, with this approach, new kernels are detected which will be automatically learnt from received annotations.

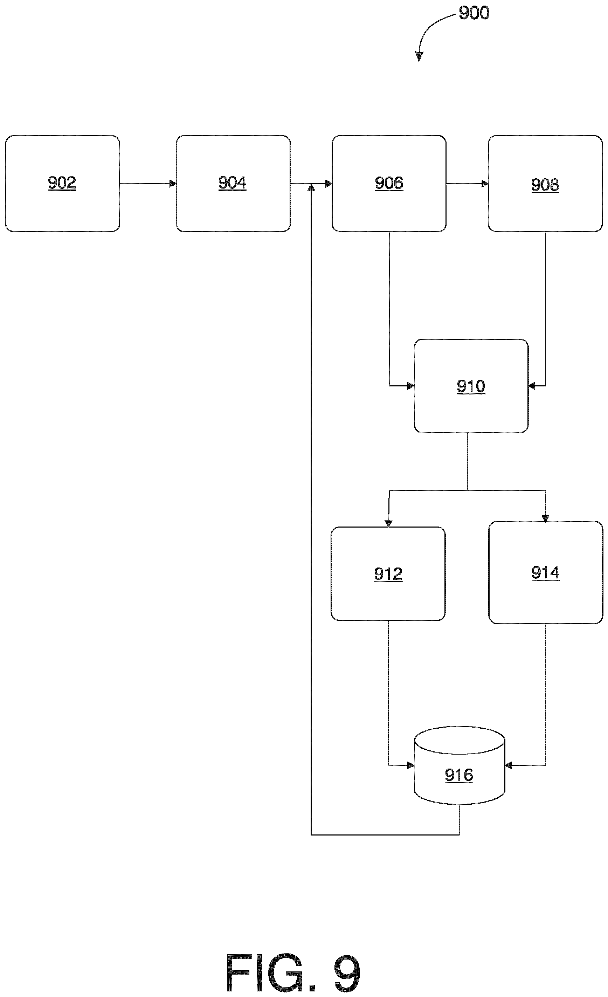

FIG 9 is a block diagram depicting a data flow within a digital representation generation module 112, such as those shown in FIG 1 and 2, capable of tuning the one or more hyperparameter ranges for the generated digital representation based on the determined one or more errors, according to an embodiment of the present invention.

At step 902, the process begins by receiving a PDF document which comprises the technical diagram. The diagram may represent systems such as piping and instrumentation diagrams (P&IDs), electrical schematics, or other engineering layouts. Then at step 904, the PDF document is then converted into an image format to allow for further image processing and analysis. This image serves as the input for connection detection and categorization. Once the image is processed, then at step 906, the computing system 102 identifies simple connections within the diagram. These simple connections typically represent straightforward relationships between components. In parallel with simple connection detection, the computing system 102 also identifies complex connections at step 908. The complex connections may involve multiple components, intersections, or different layers of connectivity (for example, intricate wiring, layered pipelines, or control paths or multiple connectors and the like). Following the detection of both simple and complex connections, the computing system 102 at step 910, receive a real time feedback, such as, for example, a human annotation. Human experts review the detected connections to provide annotations and verify the accuracy of the digital representation. This step helps refine the accuracy of the process by incorporating expert knowledge. Based on the received human feedback, the computing system 102 at step 912 generates hyper-parameter range predictions for simple connections. This involves determining the optimal hyper parameter ranges for accurately detecting simple connections in similar diagrams. Similarly, at step 914, the computing system 102 also generates hyper-parameter range predictions for complex connections based on human annotations. This ensures that the detection of complex connections is fine-tuned for plurality of types of diagrams and complexities. At step 916, the predicted hyper-parameters for both simple and complex connections are stored in a database. The database contains a repository of optimal hyperparameters for various image sets, which may be referenced for future processing tasks. Finally, an optimal statistical range for simple and complex connections are determined based on the current image set. This feedback loop ensures continuous improvement of the detection process, as the computing system 102 may adjust hyper-parameters dynamically based on the statistical analysis of prior data.

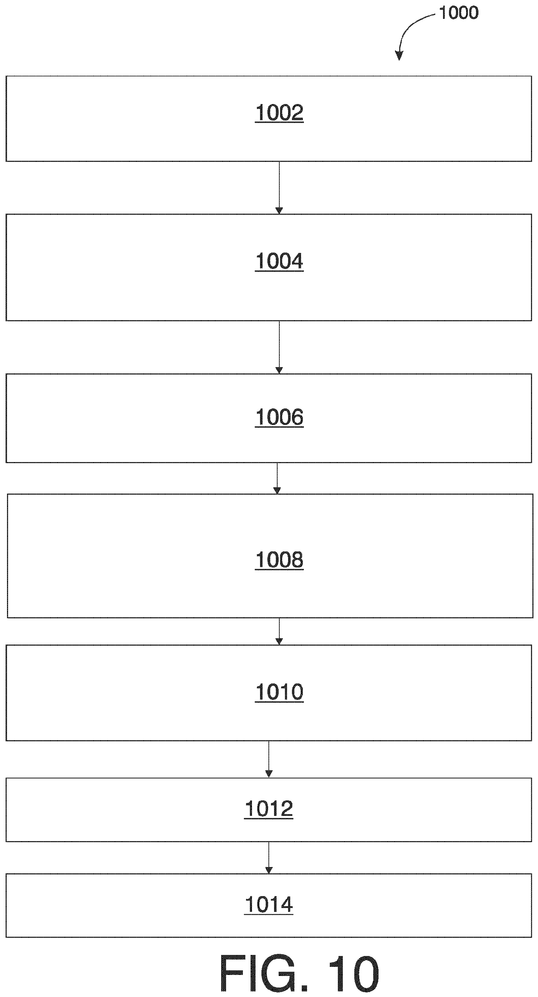

FIG 10 is a process flowchart illustrating an exemplary method 1000 for generating digital representations of one or more engineering diagrams, according to an embodiment of the present invention. At step 1002, one or more engineering diagrams associated with one or more assets 108A-N installed in a technical installation 106 are received from one or more data sources 120AN. The one or more engineering diagrams comprises one or more components connected using one or more connectors.

The one or more components represents the one or more assets 108A-N. The one or more engineering diagrams comprises at least one of an electrical wiring diagram, a piping and instrumentation diagram, circuit diagrams, Heating, Ventilation, and Air Conditioning (HVAC) diagrams, function diagrams, an engineering design of the technical installation and a floor layout of the technical installation.

At step 1004, one or more regions of interest within the received one or more engineering diagrams are determined by preprocessing the received one or more engineering diagrams. At step 1006, a presence of the one or more connectors existing between the one or more components within the determined region of interest is detected using a trained image processing model. The detected one or more connectors comprises a plurality of properties. At step 1008, one or more patterns associated with the detected one or more connectors are determined based on the plurality of properties of the one or more connectors, a type of the one or more connectors, and a position of the one or more connectors within the determined one or more regions of interest. The one or more patterns comprises one or more hyperparameter ranges corresponding to the detected one or more connectors. Furthermore, at step 1010, one or more connection paths existing between the one or more components are detected based on the detected one or more connectors and the determined one or more patterns using the trained image processing model. The one or more connection paths comprises at least one connector connecting a source node to a target node in a specific pattern. At step 1012, a digital representation of the one or more engineering diagrams are generated based on the detected one or more connection paths. At step 1014, the generated digital representation of the one or more engineering diagrams are outputted in a desired output format.

In determining the one or more regions of interest within the received one or more engineering diagrams by preprocessing the received one or more engineering diagrams, the method 1000 comprises filtering the received one or more engineering diagrams using image processing models to determine the one or more regions of interest. Further, the method 1000 comprises classifying the determined one or more regions of interest into one or more subnetworks based on the image processing models. The one or more subnetworks comprises the one or more components connected using the one or more connectors in a specific pattern.

The method 1000 further comprises obtaining a real-time feedback data for the generated digital representation from a user. Further, the method 1000 comprises validating the generated digital representation of the one or more engineering diagrams based on the obtained real-time feedback data and prestored rules. Furthermore, the method 1000 comprises determining one or more errors associated with the generated digital representation based on the results of validation. The one or more errors comprises at least one of missing connectors, missing connection paths, missing components, false connectors, false connection paths, and false components. Also, the method 1000 comprises tuning the one or more hyperparameter ranges for the generated digital representation based on the determined one or more errors. The one or more hyperparameter ranges comprises a kernel size, a minimal length, a maximum gap, angle resolution, connector types, distance resolution, and number of votes. Additionally, the method 1000 comprises generating an updated digital representation of the one or more engineering diagrams based on the tuned one or more hyperparameter ranges.

In validating the generated digital representation of the one or more engineering diagrams based on the obtained real-time feedback data and the prestored rules, the method 1000 comprises segmenting one or more regions of the digital representation comprising the obtained real-time feedback data. The obtained real time feedback data comprises a human-annotated portion of the digital representation. Further, the method 1000 comprises identifying one or more kernels along the segmented one or more regions of the digital representation using a corner point detection technique. Further, the method 1000 comprises determining whether each of the identified one or more kernels represent a valid corner based on a horizontal pixel extension and a vertical pixel extension. Furthermore, the method 1000 comprises determining a best suitable kernel from among the one or more kernels based on the determination. The best suitable kernel is determined by correlating the one or more kernels with one or more pre-stored kernels. Further, the method 1000 comprises tuning the plurality of properties associated with the best suitable kernel using a machine learning model. Furthermore, the method 1000 comprises updating a kernel database with the tuned plurality of properties associated with the best suitable kernel.

The method 1000 further comprises generating one or more recommendations for rectifying the one or more errors associated with the generated digital representation using an artificial intelligence-based model.

The method 1000 comprises identifying types of the one or more components within the determined one or more regions of interest. Further, the method 1000 comprises assigning a label to each of the identified types of the one or more components based on a prestored component tables. Furthermore, the method 1000 comprises generating the digital representation of the one or more engineering diagrams with the assigned label.

In outputting the generated digital representation of the one or more engineering diagrams in the desired output format, the method 1000 comprises transforming the generated digital representation of the one or more engineering diagrams into a visual representation to be displayed on a user interface of a user device. Further, the method 1000 comprises transforming the generated digital representation of the one or more engineering diagrams into a machine-readable format executable by one of a local system and a third-party system using Application Programming Interfaces (APIs).

In detecting the presence of the one or more connectors existing between the one or more components within the determined region of interest, the method 1000 comprises identifying at least one component from among the one or more components within each of the classified one or more sub-networks. The method 1000 comprises determining a number of connectors connected to the identified source node by analyzing a respective area of the region of interest comprising the source node. Furthermore, the method 1000 comprises detecting a presence of a line connected to the source node using a Hough transformation model. Additionally, the method 1000 comprises determining a direction of a connection path by evaluating the plurality of properties associated with the detected line. Furthermore, the method 1000 comprises detecting a presence of a junction along the determined direction of the connection path using a graph traversal model. The junction comprises a merging node connecting two or more lines in a specific pattern.

In detecting the one or more connection paths existing between the one or more components, the method 1000 comprises determining an interconnection between the one or more components within each of the classified one or more sub networks based on a type of the detected one or more connectors and the determined one or more patterns using the trained image processing model. Further, the method 1000 comprises classifying the interconnection into one of a simple connection and a complex connection based on the determined type of the interconnection. Furthermore, the method 1000 comprises determining the source node as a starting point based on the classified interconnection. Also, the method 1000 comprises determining at least one of the lines and the junction connected to the determined source node in a specific pattern.

Furthermore, the method 1000 comprises determining the plurality of properties of the determined at least one line and the junction. Also, the method 1000 comprises determining a presence of the target node on at least one end of the line by traversing along the direction of the determined at least one line and the junction using a graph traversal model. The line corresponds to one of an individual line and a line belonging to the junction. Moreover, the method 1000 comprises generating the connection path from the determined source node to the target node based on the determined plurality of properties and the determined one or more patterns of the line and the junction.

Further, the method 1000 comprises determining whether the determined interconnection corresponds to the complex connection. Furthermore, the method 1000 comprises determining the complex connection comprises at least one cross connection between at least two connectors. Additionally, the method 1000 comprises detecting at least one of full lines and non-solid lines within the determined one or more regions of interest by applying a first cross connection detection model on an original image of the engineering diagram. Moreover, the method 1000 comprises generating a manipulated image of the original image by extending the detected non-solid lines into full lines using a line detection model to rectify gaps in the lines. Also, the method 1000 comprises detecting the full lines in the manipulated image by applying a second cross connection detection model on the manipulated image. The extended non-solid lines are marked as full lines. The method 1000 comprises comparing the detected full lines from the original image with the detected full lines from the manipulated image to identify deviations. Also, method 1000 comprises determining actual non-solid lines in the original image based on the identified deviations. The actual non-solid lines are determined by filtering the full lines detected in the original image from the full lines detected in the manipulated image.

In generating the digital representation of the one or more engineering diagrams based on the detected one or more connection paths, the method 1000 comprises generating sub-digital representations for each of the one or more sub networks of the one or more engineering diagrams. Further, the method 1000 comprises correlating each of the generated sub-digital representations with the received one or more engineering diagrams. Furthermore, the method 1000 comprises determining logical interconnections between the one or more components within each of the one or more sub-more network based on the correlation. Also, the method 1000 comprises generating a consolidated digital representation of the one or more engineering diagrams based on the determined logical interconnections.

The method 1000 comprises analyzing each of the interconnections between the one or more components based on a machine learning model. Further, the method 1000 comprises generating a logical interpretation for each of the analyzed interconnections based on the type of the interconnection, type of the one or more components, a domain type of engineering diagram, one or more parameters associated with the one or more components and the real-time feedback data. The logical interpretation comprises information relating to the one or more components, type of interconnections, sub network information, and connector information.

The present invention provides continuous learning and adaptive methods to enhance the accuracy and efficiency of detecting interconnections in engineering diagrams. One significant advantage of the present invention is the continuous learning capability of the present system, which improves accuracy and efficiency of the system in generating accurate digital representations of the engineering diagrams. The present invention leverages human annotations as an additional layer of feedback to progressively reduce error rates over time. As the present system learns from real-time feedback, the time and effort required for users to correct outputs will decrease. Additionally, the present system incorporates adaptive model that can adjust to new datasets and conventions, including diagrams created using non-conventional software. This adaptability is achieved by artificial intelligence techniques, which optimize hyper parameter ranges to reduce errors and inaccuracies. The present system selects optimal hyper parameter values based on attributes such as noise levels, resolution, and the specific industry involved. The present system also supports generalization across different domains and customers, enabling effective usage of interconnection detection in various business sectors. Interconnection patterns may vary between domains, however once the hyper parameters are optimized and fine-tuned, domain-specific errors are minimized. Another key advantage is the improved performance and accuracy over time, achieved through feedback learning from annotations. The present system learns actively and refines its detection processes, ensuring more accurate results with each iteration. This process integrates human expertise to continually improve accuracy.

The present system dynamically adjusts the hyperparameters based on human annotations. As the engineering diagrams may vary in resolution and line properties, these hyperparameters are tuned for both simple and complex connections. For simple connections, this includes tuning parameters related to Hough's transformation, such as, for example, but not limited to, minimal line length, maximum gap, and patterns for non-solid lines and the like. For complex connections, the present system determines the optimal kernel size with input from the annotations.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of Reference Numerals:

100-COMPUTING ENVIRONMENT
102-COMPUTING SYSTEM
104-NETWORK
106-TECHNICAL INSTALLATION
108A-N-ONE OR MORE ASSETS
110-PLATFORM
112- DIGITAL REPRESENTATION GENERATION MODULE
114-A SERVER
116-NETWORK INTERFACE
118- APPLICATION PROGRAM INTERFACES (APIS)
120A-N- ONE OR MORE DATA SOURCES
122A-N-ONE OR MORE USER DEVICES
202-PROCESSOR
204-MEMORY
206- STORAGE UNIT
208- COMMUNICATION INTERFACE
210- INPUT-OUTPUT UNIT
212-BUS
302-PDF DOCUMENT
304-IMAGE
306-COMPONENT POSITION INFORMATION
308-TEXT POSITION INFORMATION
310-REMOVAL PROCESS
312-LINE DETECTION
314-CONNECTION DETECTION
316-DRAW LINES
318-DETECT KERNELS/JUNCTIONS
320-TRAVERSE KERNELS
322-BUILD CONNECTIONS
324-REMOVE IRRELEVANT CONNECTIONS
326-GENERATE OUTPUT
802, 802A- MISSING/UNDETECTED LINES
804-DETECTED LINES
806-DETECTED CONNECTION
808-UNDETECTED AND HUMAN ANNOTATED CONNECTION
810A-810B-HARRIS KEYPOINT ANNOTATION
812A-B- EXISTING KERNELS
814A-B- NEW KERNEL POINTS DETECTED

## Claims

1. A method for generating digital representations of one or more engineering diagrams in a computing environment (100), the method comprising:
receiving, by a processor (202), one or more engineering diagrams associated with one or more assets (108A-N) installed in a technical installation (106) from one or more data sources (120A-N), wherein the one or more engineering diagrams comprises one or more components connected using one or more connectors, and wherein the one or more components represents the one or more assets (108A-N);
determining, by the processor (202), one or more regions of interest within the received one or more engineering diagrams by preprocessing the received one or more engineering diagrams;
detecting, by the processor (202), a presence of the one or more connectors existing between the one or more components within the determined region of interest using a trained image processing model, wherein the detected one or more connectors comprises a plurality of properties;
determining, by the processor (202), one or more patterns associated with the detected one or more connectors based on the plurality of properties of the one or more connectors, a type of the one or more connectors, and a position of the one or more connectors within the determined one or more regions of interest, wherein the one or more patterns comprises one or more hyperparameter ranges corresponding to the detected one or more connectors;
detecting, by the processor (202), one or more connection paths existing between the one or more components based on the detected one or more connectors and the determined one or more patterns using the trained image processing model, wherein the one or more connection paths comprises at least one connector connecting a source node to a target node in a specific pattern;
generating, by the processor (202), a digital representation of the one or more engineering diagrams based on the detected one or more connection paths; and
outputting, by the processor (202), the generated digital representation of the one or more engineering diagrams in a desired output format.

2. The method according to any of the preceding claims, wherein determining the one or more regions of interest within the received one or more engineering diagrams by preprocessing the received one or more engineering diagrams comprises:
filtering, by the processor (202), the received one or more engineering diagrams using image processing models to determine the one or more regions of interest; and
classifying, by the processor (202), the determined one or more regions of interest into one or more subnetworks based on the image processing models, wherein the one or more subnetworks comprises the one or more components connected using the one or more connectors in a specific pattern.

3. The method according to claim 1, further comprising:
obtaining, by the processor (202), a real-time feedback data for the generated digital representation from a user;
validating, by the processor (202), the generated digital representation of the one or more engineering diagrams based on the obtained real-time feedback data and prestored rules;
determining, by the processor (202), one or more errors associated with the generated digital representation based on the results of validation, wherein the one or more errors comprises at least one of missing connectors, missing connection paths, missing components, false connectors, false connection paths, and false components;
tuning, by the processor (202), the one or more hyperparameter ranges for the generated digital representation based on the determined one or more errors, wherein the one or more hyperparameter ranges comprises a kernel size, a minimal length, a maximum gap, angle resolution, connector types, distance resolution, and number of votes; and
generating, by the processor (202), an updated digital representation of the one or more engineering diagrams based on the tuned one or more hyperparameter ranges.

4. The method according to claim 3, wherein validating the generated digital representation of the one or more engineering diagrams based on the obtained real-time feedback data and the prestored rules comprises:
segmenting, by the processor (202), one or more regions of the digital representation comprising the obtained real-time feedback data, wherein the obtained real time feedback data comprises a human-annotated portion of the digital representation;
identifying, by the processor (202), one or more kernels along the segmented one or more regions of the digital representation using a corner point detection technique;
determining, by the processor (202), whether each of the identified one or more kernels represent a valid corner based on a horizontal pixel extension and a vertical pixel extension;
determining, by the processor (202), a best suitable kernel from among the one or more kernels based on the determination, wherein the best suitable kernel is determined by correlating the one or more kernels with one or more pre-stored kernels;
tuning, by the processor (202), the plurality of properties associated with the best suitable kernel using a machine learning model; and
updating, by the processor (202), a kernel database with the tuned plurality of properties associated with the best suitable kernel.

5. The method according to any of the preceding claims, further comprising:
generating, by the processor (202), one or more recommendations for rectifying the one or more errors associated with the generated digital representation using an artificial intelligence-based model.

6. The method according to any of the preceding claims, further comprising:
identifying, by the processor (202), types of the one or more components within the determined one or more regions of interest;
assigning, by the processor (202), a label to each of the identified types of the one or more components based on a prestored component table; and
generating, by the processor (202), the digital representation of the one or more engineering diagrams with the assigned label.

7. The method according to any of the preceding claims, wherein outputting the generated digital representation of the one or more engineering diagrams in the desired output format comprises:
transforming, by the processor (202), the generated digital representation of the one or more engineering diagrams into a visual representation to be displayed on a user interface of a user device (122A-N); and
transforming, by the processor (202), the generated digital representation of the one or more engineering diagrams into a machine readable format executable by one of a local system and a third party system using Application Programming Interfaces (APIs).

8. The method according to any of the preceding claims, wherein detecting the presence of the one or more connectors existing between the one or more components within the determined region of interest comprises:
identifying, by the processor (202), at least one component from among the one or more components within each of the classified one or more sub-networks;
determining, by the processor (202), a number of connectors connected to the identified source node by analyzing a respective area of the region of interest comprising the source node;
detecting, by the processor (202), a presence of a line connected to the source node using a Hough transformation model;
determining, by the processor (202), a direction of a connection path by evaluating the plurality of properties associated with the detected line; and
detecting, by the processor (202), a presence of a junction along the determined direction of the connection path using a graph traversal model, wherein the junction comprises a merging node connecting two or more lines in a specific pattern.

9. The method according to any of the preceding claims, wherein detecting the one or more connection paths existing between the one or more components comprises:
determining, by the processor (202), an interconnection between the one or more components within each of the classified one or more sub networks based on a type of the detected one or more connectors and the determined one or more patterns using the trained image processing model;
classifying, by the processor (202), the interconnection into one of a simple connection and a complex connection based on the determined type of the interconnection;
determining, by the processor (202), the source node as a starting point based on the classified interconnection;
determining, by the processor (202), at least one of the lines and the junction connected to the determined source node in a specific pattern;
determining, by the processor (202), the plurality of properties of the determined at least one line and the junction;
determining, by the processor (202), a presence of the target node on at least one end of the line by traversing along the direction of the determined at least one line and the junction using a graph traversal model, wherein the line corresponds to one of an individual line and a line belonging to the junction; and
generating the connection path from the determined source node to the target node based on the determined plurality of properties and the determined one or more patterns of the line and the junction.

10. The method according to any of the preceding claims, further comprising:
determining, by the processor (202), whether the determined interconnection corresponds to the complex connection;
determining, by the processor (202), whether the complex connection comprises at least one cross connection between at least two connectors;
detecting, by the processor (202), at least one of full lines and non-solid lines within the determined one or more regions of interest by applying a first cross connection detection model on an original image of the engineering diagram;
generating, by the processor (202), a manipulated image of the original image by extending the detected non-solid lines into full lines using a line detection model to rectify gaps in the lines;
detecting, by the processor (202), the full lines in the manipulated image by applying a second cross connection detection model on the manipulated image, wherein the extended non-solid lines are marked as full lines;
comparing, by the processor (202), the detected full lines from the original image with the detected full lines from the manipulated image to identify deviations; and
determining, by the processor (202), actual non-solid lines in the original image based on the identified deviations, wherein the actual non-solid lines are determined by filtering the full lines detected in the original image from the full lines detected in the manipulated image.

11. The method according to any of the preceding claims, wherein generating the digital representation of the one or more engineering diagrams based on the detected one or more connection paths comprises:
generating, by the processor (202), sub-digital representations for each of the one or more sub networks of the one or more engineering diagrams;
correlating, by the processor (202), each of the generated sub-digital representations with the received one or more engineering diagrams;
determining, by the processor (202), logical interconnections between the one or more components within each of the one or more sub-more networks based on the correlation; and
generating, by the processor (202), a consolidated digital representation of the one or more engineering diagrams based on the determined logical interconnections.

12. The method according to any of the preceding claims, further comprising:
analyzing, by the processor (202), each of the interconnections between the one or more components based on a machine learning model; and
generating, by the processor (202), a logical interpretation for each of the analyzed interconnections based on the type of the interconnection, type of the one or more components, a domain type of engineering diagram, one or more parameters associated with the one or more components and the real-time feedback data, wherein the logical interpretation comprises information relating to the one or more components, type of interconnections, sub network information, and connector information.

13. A computing system comprising:
one or more processor(s) (202); and
a memory (204)coupled to the one or more processor (s) (202), wherein the memory (204) comprises digital representation generation module stored in the form of machine-readable instructions executable by the one or more processor(s) (202), wherein the digital representation generation module (112) is capable of performing a method according to any of the claims 1-13.

14. A computing environment (100) comprising:
a computing system (102) according to claim 14;
a technical installation (106) comprising one or more components (108A-N) capable of communicating component data to the computing system (102); and
at least one user device (122A-N) communicatively coupled to the computing system (102) and the technical installation (106) via the network (104).

15. A computer program product comprising machine-readable instructions stored therein that, when executed by one or more processors (202), cause the one or more processor (202) to perform a method according to any of the claims 1-13.
